(19) Europäisches Patentamt
European Patent Office
Office européen des brevets

(11) EP 3 683 198 A1

(12) **EUROPEAN PATENT APPLICATION**

(43) Date of publication:
**22.07.2020 Bulletin 2020/30**

(51) Int Cl.:
***C03C 17/32*** *(2006.01)* ***C09D 4/00*** *(2006.01)*

(21) Application number: **20152006.1**

(22) Date of filing: **15.01.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.01.2019 US 201962793055 P**
**28.02.2019 NL 2022651**

(71) Applicant: **Corning Incorporated**
**Corning, New York 14831 (US)**

(72) Inventors:
- **CHEN, Yangbin**
**CORNING, NY New York 14831 (US)**
- **CHIEN, Ching-Kee**
**CORNING, NY New York 14831 (US)**

(74) Representative: **Duxbury, Stephen**
**Arnold & Siedsma**
**Bavariaring 17**
**80336 München (DE)**

(54) **SECONDARY COATINGS FOR OPTICAL FIBERS**

(57) The present disclosure provides impact-resistant secondary coatings for optical fibers. The secondary coatings are obtained as cured products of a curable coating composition that includes an alkoxylated bisphenol-A diacrylate and an alkoxylated trimethylolpropane triacrylate, or an alkoxylated bisphenol-A diacrylate and a tris[(acryloyloxy)alkyl] isocyanurate. The curable coating composition optionally includes bisphenol-A epoxy diacrylate and optionally lacks an alkoxylated bisphenol-A diacrylate having a degree of alkoxylation greater than 17.

EP 3 683 198 A1

## Description

This description pertains to coatings for optical fiber and methods of making coatings for optical fibers. More particularly, this description relates to secondary coatings for optical fibers that feature high fracture toughness and high resistance to punctures and mechanical damage. Most particularly, this description relates to secondary coatings that adequately protect optical fibers from damage even at small thicknesses, thus enabling smaller fiber diameters and higher fiber counts in optical fiber cables.

The light transmitting performance of an optical fiber is highly dependent upon the properties of the polymer coating that is applied to the glass fiber during manufacturing. Typically, a dual-layer coating system is used that includes a soft (low modulus) primary coating in contact with the glass fiber and a hard (high modulus) secondary coating that surrounds and contacts the primary coating. The secondary coating provides mechanical integrity and allows the optical fiber to be handled for processing and installation in cables, while the primary coating acts to dissipate external forces to prevent them from being transferred to the glass fiber. By dampening external forces, the primary coating prevents damage to the glass fiber and minimizes attenuation of optical signals by reducing microbending losses.

The functional requirements of the primary coating place several constraints on the materials that are used for these coatings. To prevent microbending and other external mechanical disturbances from inducing attenuation losses of the glass fiber, the Young's modulus of the primary coating must be low (generally less than 1 MPa, and ideally less than 0.5 MPa). To ensure that the modulus remains low when the fiber is exposed to low temperatures during deployment in cold climates, the glass transition temperature of the primary coating must be low (generally less than 0 °C, and preferably less than -20 °C) so that the primary coating remains rubbery and does not transform to a rigid glassy state. The tensile strength of the primary coating, must also be high enough to suppress formation of defects in the high thermal and mechanical stress environments that arise both in the application and curing of the primary coating during fiber draw and during further processing of the fiber after the primary coating is cured (e.g. when applying a secondary coating or an ink layers, or when stripping or bundling the optical fiber to form a cable).

The secondary coating must have sufficient mechanical integrity and durability to protect the glass fiber, while maintaining sufficient flexibility without breaking to enable manipulation and handling of the optical fiber. The secondary coating should also have low water absorption, low tackiness, chemical robustness, low coefficient of friction to enable winding on spools and installation in cables, and good adhesion to the primary coating. To ensure suitable mechanical integrity, the glass transition temperature of the secondary coating must be high (generally above 40 °C, and preferably above 50 °C) so that the secondary coating remains in a rigid glassy state throughout the range of expected deployment temperatures.

Optical fibers with reduced diameters are attractive for reducing the size of cables needed to accommodate a given optical fiber count, increasing the optical fiber count of cables of a given diameter, decreasing cable cost, efficiently using existing infrastructure for upgrading cable installations, and reducing the footprint of new cable installations. To reduce the diameter of optical fibers, it becomes necessary to reduce the thickness of the primary and/or secondary coatings. Thinner primary coatings, however, are more susceptible to shear-induced defects, while thinner secondary coatings are more susceptible to punctures. There is a need for coatings for optical fibers that provide adequate performance at reduced thickness.

The present disclosure describes secondary coatings for optical fibers. The secondary coatings offer high resistance to punctures, high resistance to mechanical damage, high fracture toughness, and high tensile strength at small thicknesses. The secondary coatings lack urethane linkages and are formed as cured products of a secondary coating composition that includes a multifunctional acrylate monomer.

The present description extends to:
A curable coating composition comprising:

an alkoxylated bisphenol-A diacrylate monomer in an amount greater than 55 wt%, the alkoxylated bisphenol-A diacrylate monomer having a degree of alkoxylation in the range from 2 to 16; and
a triacrylate monomer in an amount in the range from 2.0 wt% to 25 wt%, the triacrylate monomer comprising an alkoxylated trimethylolpropane triacrylate monomer having a degree of alkoxylation in the range from 2 to 16 or a tris[(acryloyloxy)alkyl] isocyanurate monomer.

The present description extends to cure products of the curable coating compositions disclosed herein and to optical fibers comprising cured products of the curable coating compositions disclosed herein.

The present description extends to methods of making optical fibers that include applying a curable coating composition disclosed herein to a glass fiber and curing the curable coating composition to form a coating on the glass fiber.

Additional features and advantages will be set forth in the detailed description which follows, and in part will be readily apparent to those skilled in the art from the description or recognized by practicing the embodiments as described in the written description and claims hereof, as well as the appended drawings.

It is to be understood that both the foregoing general description and the following detailed description are merely exemplary, and are intended to provide an overview or framework to understand the nature and character of the claims.

The accompanying drawings are included to provide a further understanding, and are incorporated in and constitute a part of this specification. The drawings are illustrative of selected aspects of the present disclosure, and together with the description serve to explain principles and operation of methods, products, and compositions embraced by the present disclosure.

FIG. 1 is a schematic view of a coated optical fiber according one embodiment.
FIG. 2 is a schematic view of a representative optical fiber ribbon.
FIG. 3 is a schematic view of a representative optical fiber cable.
FIG. 4 is a schematic depiction of a configuration of a film sample for measurement of fracture toughness.
FIG. 5 shows measurements of the glass transition temperature of two secondary coatings.
FIG. 6 shows the dependence of puncture load on cross-sectional area for three secondary coatings.

The present disclosure is provided as an enabling teaching and can be understood more readily by reference to the following description, drawings, examples, and claims. To this end, those skilled in the relevant art will recognize and appreciate that many changes can be made to the various aspects of the embodiments described herein, while still obtaining the beneficial results. It will also be apparent that some of the desired benefits of the present embodiments can be obtained by selecting some of the features without utilizing other features. Accordingly, those who work in the art will recognize that many modifications and adaptations are possible and can even be desirable in certain circumstances and are a part of the present disclosure. Therefore, it is to be understood that this disclosure is not limited to the specific compositions, articles, devices, and methods disclosed unless otherwise specified. It is also to be understood that the terminology used herein is for the purposes of describing particular aspects only and is not intended to be limiting.

In this specification and in the claims which follow, reference will be made to a number of terms which shall be defined to have the following meanings:
"Include", "includes", or like terms means encompassing but not limited to, that is, inclusive and not exclusive.

As used herein, the term "about" means that amounts, sizes, formulations, parameters, and other quantities and characteristics are not and need not be exact, but may be approximate and/or larger or smaller, as desired, reflecting tolerances, conversion factors, rounding off, measurement error and the like, and other factors known to those of skill in the art. When a value is said to be about or about equal to a certain number, the value is within $\pm$10% of the number. For example, a value that is about 10 refers to a value between 9 and 11, inclusive. When the term "about" is used in describing a value or an end-point of a range, the disclosure should be understood to include the specific value or end-point referred to. Whether or not a numerical value or end-point of a range in the specification recites "about", the numerical value or end-point of a range is intended to include two embodiments: one modified by "about," and one not modified by "about". It will be further understood that the end-points of each of the ranges are significant both in relation to the other end-point, and independently of the other end-point.

The term "about" further references all terms in the range unless otherwise stated. For example, about 1, 2, or 3 is equivalent to about 1, about 2, or about 3, and further comprises from about 1-3, from about 1-2, and from about 2-3. Specific and preferred values disclosed for compositions, components, ingredients, additives, and like aspects, and ranges thereof, are for illustration only; they do not exclude other defined values or other values within defined ranges. The compositions and methods of the disclosure include those having any value or any combination of the values, specific values, more specific values, and preferred values described herein.

The indefinite article "a" or "an" and its corresponding definite article "the" as used herein means at least one, or one or more, unless specified otherwise.

As used herein, contact refers to direct contact or indirect contact. Direct contact refers to contact in the absence of an intervening material and indirect contact refers to contact through one or more intervening materials. Elements in direct contact touch each other. Elements in indirect contact do not touch each other, but do touch an intervening material or series of intervening materials, where the intervening material or at least one of the series of intervening materials touches the other. Elements in contact may be rigidly or non-rigidly joined. Contacting refers to placing two elements in direct or indirect contact. Elements in direct (indirect) contact may be said to directly (indirectly) contact each other.

As used herein, "directly adjacent" means directly contacting and "indirectly adjacent" mean indirectly contacting. The term "adjacent" encompasses elements that are directly or indirectly adjacent to each other.

The coatings described herein are formed from curable coating compositions. Curable coating compositions include one or more curable components. As used herein, the term "curable" is intended to mean that the component, when exposed to a suitable source of curing energy, includes one or more curable functional groups capable of forming covalent bonds that participate in linking the component to itself or to other components of the coating composition. The product obtained by curing a curable coating composition is referred to herein as the cured product of the composition.

The cured product is preferably a polymer. The curing process is induced by energy. Forms of energy include radiation or thermal energy. In a preferred embodiment, curing occurs with radiation, where radiation refers to electromagnetic radiation. Curing induced by radiation is referred to herein as radiation curing or photocuring. A radiation-curable component is a component that can be induced to undergo a curing reaction when exposed to radiation of a suitable wavelength at a suitable intensity for a sufficient period of time. Suitable wavelengths include wavelengths in the infrared, visible, or ultraviolet portion of the electromagnetic spectrum. The radiation curing reaction occurs in the presence of a photoinitiator. A radiation-curable component may also be thermally curable. Similarly, a thermally curable component is a component that can be induced to undergo a curing reaction when exposed to thermal energy of sufficient intensity for a sufficient period of time. A thermally curable component may also be radiation curable.

A curable component includes one or more curable functional groups. A curable component with only one curable functional group is referred to herein as a monofunctional curable component. A curable component having two or more curable functional groups is referred to herein as a multifunctional curable component. Multifunctional curable components include two or more functional groups capable of forming covalent bonds during the curing process and can introduce crosslinks into the polymeric network formed during the curing process. Multifunctional curable components may also be referred to herein as "crosslinkers" or "curable crosslinkers". Curable components include curable monomers and curable oligomers. Examples of functional groups that participate in covalent bond formation during the curing process are identified hereinafter.

The term "molecular weight" when applied to polymers means number average molecular weight ($M_n$).

The term "(meth)acrylate" means methacrylate, acrylate, or a combination of methacrylate and acrylate.

The term "urethane-free" when used in reference to a coating composition means that the coating composition lacks a component that includes a urethane linkage. That is, no components in the coating composition include a urethane linkage.

The term "urethane-free" when used in reference to a cured product of a coating composition means that the cured product lacks a urethane linkage. That is, the cured product has no urethane linkages.

The term "urethane linkage" means a chemical linkage of the type shown below:

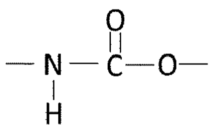

or

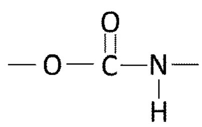

Values of Young's modulus, %elongation, tensile strength, yield strength, fracture toughness, puncture load, and damage resistance refer to values as determined under the measurement conditions by the procedures described herein.

"Refractive index" refers to the refractive index at a wavelength of 1550 nm.

Relative refractive index," as used herein, is defined in Eq. (1) as:

$$\Delta_i(r_i)\% = 100\frac{\left(n_i^2 - n_{ref}^2\right)}{2n_i^2} \qquad (1)$$

where $n_i$ is the refractive index at radial position $r_i$ in the glass fiber, unless otherwise specified, and $n_{ref}$ is the refractive index of pure silica glass, unless otherwise specified. Accordingly, as used herein, the relative refractive index percent is relative to pure silica glass. As used herein, the relative refractive index is represented by $\Delta$ (or "delta") or $\Delta\%$ (or "delta %") and its values are given in units of "%", unless otherwise specified. Relative refractive index may also be expressed as $\Delta(r)$ or $\Delta(r)\%$.

Reference will now be made in detail to illustrative embodiments of the present description.

The present description relates to curable coating compositions, coatings and cured products formed from the curable coating compositions, and coated articles coated or encapsulated by the coating obtained by curing the curable coating compositions. In a preferred embodiment, the curable coating composition is a composition for forming coatings for optical fibers, the coating is an optical fiber coating, and the coated article is a coated optical fiber. The present description also relates to methods of making curable coating compositions, methods of forming coatings and cured products from the curable coating compositions, and methods of coating fibers with the curable coating composition. Curable coating compositions used to form secondary coating compositions for optical fibers are emphasized herein.

One embodiment relates to an optical fiber. The optical fiber includes a glass fiber surrounded by a coating. An example of an optical fiber is shown in schematic cross-sectional view in FIG. 1. Optical fiber 10 includes glass fiber 11 surrounded by primary coating 16 and secondary coating 18. Further description of glass fiber 11, primary coating

16, and secondary coating 18 is provided below.

FIG. 2 illustrates an optical fiber ribbon 30. The ribbon 30 includes a plurality of optical fibers 20 and a matrix 32 encapsulating the plurality of optical fibers. Optical fibers 20 include a core region, a cladding region, a primary coating, and a secondary coating as described above. Optical fibers 20 may also include a tertiary coating as noted above. The secondary coating may include a pigment. The optical fibers 20 are aligned relative to one another in a substantially planar and parallel relationship. The optical fibers in fiber optic ribbons are encapsulated by the ribbon matrix 32 in any known configuration (e.g., edge-bonded ribbon, thin-encapsulated ribbon, thick-encapsulated ribbon, or multi-layer ribbon) by conventional methods of making fiber optic ribbons. In FIG. 2, the fiber optic ribbon 30 contains twelve (12) optical fibers 20; however, it should be apparent to those skilled in the art that any number of optical fibers 20 (e.g., two or more) may be employed to form fiber optic ribbon 30 disposed for a particular use. The ribbon matrix 32 can be formed from the same composition used to prepare a secondary coating, or the ribbon matrix 32 can be formed from a different composition that is otherwise compatible for use.

FIG. 3 illustrates an optical fiber cable 40. Cable 40 includes a plurality of optical fibers 20 surrounded by jacket 42. Optical fibers 20 may be densely or loosely packed into a conduit enclosed by inner surface 44 of jacket 42. The number of fibers placed in jacket 42 is referred to as the "fiber count" of optical fiber cable 40. The jacket 42 is formed from an extruded polymer material and may include multiple concentric layers of polymers or other materials. Optical fiber cable 40 may include one or more strengthening members (not shown) embedded within jacket 42 or placed within the conduit defined by inner surface 44. Strengthening members include fibers or rods that are more rigid than jacket 42. The strengthening member is made from metal, braided steel, glass-reinforced plastic, fiber glass, or other suitable material. Optical fiber cable 40 may include other layers surrounded by jacket 42 (e.g. armor layers, moisture barrier layers, rip cords, etc.). Optical fiber cable 40 may have a stranded, loose tube core or other fiber optic cable construction.

*Glass Fiber.* The optical fibers disclosed herein include a glass fiber with a core region, a cladding region surrounding the core region, and a coating surrounding the cladding region. The core region and cladding region are glass. Glass fiber 11 includes a core region 12 and a cladding region 14, as is familiar to the skilled artisan. Core region 12 has a higher refractive index than cladding region 14 and glass fiber 11 functions as a waveguide.

The cladding region is a single homogeneous region or multiple regions that differ in relative refractive index. The multiple cladding regions are preferably concentric regions. In some embodiments, the cladding region includes an inner cladding region and an outer cladding region. The relative refractive index of the inner cladding region may be less than the relative refractive index of the outer cladding region. In some embodiments, the cladding region includes a depressed-index cladding region. The depressed-index cladding region is a cladding region having a lower relative refractive index than adjacent inner and/or outer cladding region(s). The depressed-index cladding region may also be referred to herein as a trench or trench region. The depressed-index cladding region surrounds a core region and/or an inner cladding region. The depressed-index cladding region is surrounded by an outer cladding region. The depressed-index cladding region may contribute to a reduction in bending losses. The core region, inner cladding region, depressed-index cladding region, and outer cladding region are also referred to as core, cladding, inner cladding, depressed-index cladding, and outer cladding, respectively.

In one embodiment, the optical fiber includes a core surrounded by an inner cladding region, a depressed-index cladding region surrounding the inner cladding regions, an outer cladding region surrounding the depressed-index cladding region, a primary coating surrounding the outer cladding region, and a secondary coating surrounding the primary coating. The inner cladding region is directly adjacent to the core, the depressed-index cladding region is directly adjacent to the inner cladding region, the outer cladding region is directly adjacent to the depressed-index cladding region, the primary coating is directly adjacent to the outer cladding region, and the secondary coating is directly adjacent to the primary coating.

In another embodiment, the glass fiber lacks an inner cladding region and the optical fiber includes a depressed-index cladding region surrounding a core, an outer cladding region surrounding the depressed-index cladding region, a primary coating surrounding the outer cladding region, and a secondary coating surrounding the primary coating. The depressed-index cladding region is directly adjacent to the core region, the outer cladding region is directly adjacent to the depressed-index cladding region, the primary coating is directly adjacent to the outer cladding region, and the secondary coating is directly adjacent to the primary coating.

In a further embodiment, the glass fiber lacks an inner cladding region and a depressed-index cladding region and the optical fiber includes a cladding region surrounding a core, a primary coating surrounding the cladding region, and a secondary coating surrounding the primary coating. The cladding region is directly adjacent to the core, the primary coating is directly adjacent to the cladding region, and the secondary coating is directly adjacent to the primary coating. A tertiary layer (e.g. ink layer) optionally surrounds or is directly adjacent to the secondary coating in any of the foregoing embodiments.

The relative refractive indices of the core region, inner cladding region, depressed-index cladding region, and outer cladding region may differ. Each of the regions may be formed from doped or undoped silica glass. Variations in refractive index relative to undoped silica glass are accomplished by incorporating updopants or downdopants at levels

designed to provide a targeted refractive index or refractive index profile using techniques known to those of skill in the art. Updopants are dopants that increase the refractive index of the glass relative to the undoped glass composition. Downdopants are dopants that decrease the refractive index of the glass relative to the undoped glass composition. In one embodiment, the undoped glass is pure silica glass. When the undoped glass is pure silica glass, updopants include alkali metal oxides, Cl, Br, Ge, Al, P, Ti, Zr, Nb, and Ta, and downdopants include F and B. Regions of constant refractive index may be formed by not doping or by doping at a uniform concentration. Regions of variable refractive index are formed through non-uniform spatial distributions of dopants and/or through incorporation of different dopants in different regions.

*Optical Fiber Coatings.* The transmissivity of light through an optical fiber is highly dependent on the properties of the coatings applied to the glass fiber. The coatings typically include a primary coating and a secondary coating, where the secondary coating surrounds the primary coating and the primary coating contacts the glass fiber (which includes a central core region surrounded by a cladding region). In a typical configuration, the primary coating directly contacts the glass fiber and the secondary coating directly contacts the primary coating. The secondary coating is a harder material (higher Young's modulus) than the primary coating and is designed to protect the glass fiber from damage caused by abrasion or external forces that arise during processing, handling, and installation of the optical fiber. The primary coating is a softer material (lower Young's modulus) than the secondary coating and is designed to buffer or dissipates stresses that result from forces applied to the outer surface of the secondary coating. Dissipation of stresses within the primary coating attenuates the stress and minimizes the stress that reaches the glass fiber. The primary coating is especially important in dissipating stresses that arise due to the microbends that the optical fiber encounters when deployed in a cable. The microbending stresses transmitted to the glass fiber need to be minimized because microbending stresses create local perturbations in the refractive index profile of the glass fiber. The local refractive index perturbations lead to intensity losses for the light transmitted through the glass fiber. By dissipating stresses, the primary coating minimizes intensity losses caused by microbending.

The primary coating 16 preferably has a higher refractive index than the cladding region of the glass fiber in order to allow it to strip errant optical signals away from the core region. The primary coating should maintain adequate adhesion to the glass fiber during thermal and hydrolytic aging, yet be strippable from the glass fiber for splicing purposes.

Primary and secondary coatings are typically formed by applying a curable coating composition to the glass fiber as a viscous liquid and curing. The optical fiber may also include a tertiary coating (not shown) that surrounds the secondary coating. The tertiary coating may include pigments, inks or other coloring agents to mark the optical fiber for identification purposes and typically has a Young's modulus similar to the Young's modulus of the secondary coating.

Various embodiments of curable secondary coating compositions and properties thereof are now described.

*Secondary Coating - Compositions.* The secondary coating is a cured product of a curable secondary coating composition that includes a monomer, a photoinitiator, and an optional additive. In a preferred embodiment, the secondary coating and curable secondary coating composition are urethane free. The present disclosure describes radiation-curable secondary coating compositions, cured products of the radiation-curable secondary coating compositions, optical fibers coated with a radiation-curable secondary coating composition, and optical fibers coated with the cured product of a radiation-curable secondary coating composition.

The secondary coating is formed as the cured product of a radiation-curable secondary coating composition that includes a monomer component with one or more monomers. The monomers preferably include ethylenically unsaturated compounds. The one or more monomers are present in an amount of 50 wt% or greater, or in an amount from about 60 wt% to about 99 wt%, or in an amount from about 75 wt% to about 99 wt%, or in an amount from about 80 wt% to about 99 wt% or in an amount from about 85 wt% to about 99 wt%. In a preferred embodiment, none of the monomers of the monomer component includes a urethane linkage.

The monomers include functional groups that are polymerizable groups and/or groups that facilitate or enable crosslinking. The monomers are monofunctional monomers or multifunctional monomers. In combinations of two or more monomers, the constituent monomers are monofunctional monomers, multifunctional monomers, or a combination of monofunctional monomers and multifunctional monomers. In one embodiment, the monomer component of the curable secondary coating composition includes ethylenically unsaturated monomers. Suitable functional groups for ethylenically unsaturated monomers include, without limitation, (meth)acrylates, acrylamides, N-vinyl amides, styrenes, vinyl ethers, vinyl esters, acid esters, and combinations thereof.

Exemplary monofunctional ethylenically unsaturated monomers for the curable secondary coating composition include, without limitation, hydroxyalkyl acrylates such as 2-hydroxyethyl-acrylate, 2-hydroxypropyl-acrylate, and 2-hydroxybutyl-acrylate; long- and short-chain alkyl acrylates such as methyl acrylate, ethyl acrylate, propyl acrylate, isopropyl acrylate, butyl acrylate, amyl acrylate, isobutyl acrylate, t-butyl acrylate, pentyl acrylate, isoamyl acrylate, hexyl acrylate, heptyl acrylate, octyl acrylate, isooctyl acrylate, 2-ethylhexyl acrylate, nonyl acrylate, decyl acrylate, isodecyl acrylate, undecyl acrylate, dodecyl acrylate, lauryl acrylate, octadecyl acrylate, and stearyl acrylate; aminoalkyl acrylates such as dimethylaminoethyl acrylate, diethylaminoethyl acrylate, and 7-amino-3,7-dimethyloctyl acrylate; alkoxyalkyl acrylates such as butoxyethyl acrylate, phenoxyethyl acrylate (e.g., SR339, Sartomer Company, Inc.), and ethoxyethoxyethyl acrylate; single and multi-ring cyclic aromatic or non-aromatic acrylates such as cyclohexyl acrylate, benzyl acrylate, dicyclopentadiene acrylate, dicyclopentanyl acrylate, tricyclodecanyl acrylate, bomyl acrylate, isobornyl acrylate (e.g., SR423, Sartomer Company, Inc.), tetrahydrofiurfuryl acrylate (e.g., SR285, Sartomer Company, Inc.), caprolactone acrylate (e.g., SR495, Sartomer Company, Inc.), and acryloylmorpholine; alcohol-based acrylates such as polyethylene glycol monoacrylate, polypropylene glycol monoacrylate, methoxyethylene glycol acrylate, methoxypolypropylene glycol acrylate, methoxypolyethylene glycol acrylate, ethoxydiethylene glycol acrylate, and various alkoxylated alkylphenol acrylates such as ethoxylated(4) nonylphenol acrylate (e.g., Photomer 4066, IGM Resins); acrylamides such as diacetone acrylamide, isobutoxymethyl acrylamide, N,N'-dimethyl-aminopropyl acrylamide, N,N-dimethyl acrylamide, N,N diethyl acrylamide, and t-octyl acrylamide; vinylic compounds such as N-vinylpyrrolidone and N-vinylcaprolactam; and acid esters such as maleic acid ester and fumaric acid ester. With respect to the long and short chain alkyl acrylates listed above, a short chain alkyl acrylate is an alkyl group with 6 or less carbons and a long chain alkyl acrylate is an alkyl group with 7 or more carbons.

Other representative radiation-curable ethylenically unsaturated monomers include alkoxylated monomers with one or more acrylate or methacrylate groups. An alkoxylated monomer is one that includes one or more alkoxylene groups, where an alkoxylene group has the form -O-R- and R is a linear or branched hydrocarbon. Examples of alkoxylene groups include ethoxylene ($-O-CH_2-CH_2-$), n-propoxylene ($-O-CH_2-CH_2-CH_2-$), isopropoxylene ($-O-CH_2$-v $CH(CH_3)-$), etc.

As used herein, degree of alkoxylation refers to the number of alkoxylene groups divided by the number of acrylate and methacrylate groups in a molecule of the monomer. For monofunctional alkoxylated monomers, the degree of alkoxylation corresponds to the number of alkoxylene groups in a molecule of the monomer. In a preferred embodiment, the alkoxylene groups of a monofunctional alkoxylated monomer are bonded consecutively. For a difunctional alkoxylated monomer, the degree of alkoxylation corresponds to one half of the number of alkoxylene groups in a molecule of the monomer. In a preferred embodiment, the alkoxylene groups in a difunctional alkoxylated monomer are bonded consecutively in each of two groups where the two groups are separated by a chemical linkage and each group includes half or approximately half of the number of alkoxylene groups in the molecule. For a trifunctional alkoxylated monomer, the degree of alkoxylation corresponds to one third of the number of alkoxylene groups in a molecule of the monomer. In a preferred embodiment, the alkoxylene groups in a trifunctional alkoxylated monomer are bonded consecutively in three groups, where the three groups are separated by chemical linkages and each group includes a third or approximately a third of the number of alkoxylene groups in the molecule.

Representative multifunctional ethylenically unsaturated monomers for the curable secondary coating composition include, without limitation, alkoxylated bisphenol-A diacrylates, such as ethoxylated bisphenol-A diacrylate, and alkoxylated trimethylolpropane triacrylates, such as ethoxylated trimethylolpropane triacrylate, with the degree of alkoxylation being 2 or greater, or 4 or greater, or 6 or greater, or less than 16 or less than 12, or less than 8, or less than 5, or in the range from 2 to 16, or in the range from 2 to 12, or in the range from 2 to 8, or in the range from 2 to 4, or in the range from 3 to 12, or in the range from 3 to 8, or in the range from 3 to 5, or in the range from 4 to 12, or in the range from 4 to 10, or in the range from 4 to 8.

Multifunctional ethylenically unsaturated monomers of the curable secondary coating composition include ethoxylated bisphenol-A diacrylate with a degree of ethoxylation ranging from 2 to 16 (e.g. SR349, SR601, and SR602 available from Sartomer Company, Inc. West Chester, Pa. and Photomer 4028, available from IGM Resins), or propoxylated bisphenol-A diacrylate with the degree of propoxylation being 2 or greater; for example, ranging from 2 to 16; methylolpropane polyacrylates with and without alkoxylation such as alkoxylated trimethylolpropane triacrylate or ethoxylated trimethylolpropane triacrylate with the degree of alkoxylation or ethoxylation being 2 or greater; for example, ranging from 2 to 16 or from 3 to 10 (e.g., Photomer 4149, IGM Resins, and SR499, Sartomer Company, Inc.); propoxylated-trimethylolpropane triacrylate with the degree of propoxylation being 2 or greater; for example, ranging from 2 to 16 (e.g., Photomer 4072, IGM Resins and SR492, Sartomer); ditrimethylolpropane tetraacrylate (e.g., Photomer 4355, IGM Resins); alkoxylated glyceryl triacrylates such as propoxylated glyceryl triacrylate with the degree of propoxylation being 2 or greater; for example, ranging from 2 to 16 (e.g., Photomer 4096, IGM Resins and SR9020, Sartomer); erythritol polyacrylates with and without alkoxylation, such as pentaerythritol tetraacrylate (e.g., SR295, available from Sartomer Company, Inc. (West Chester, Pa.)), ethoxylated pentaerythritol tetraacrylate (e.g., SR494, Sartomer Company, Inc.), and dipentaerythritol pentaacrylate (e.g., Photomer 4399, IGM Resins, and SR399, Sartomer Company, Inc.); isocyanurate polyacrylates formed by reacting an appropriate functional isocyanurate with an acrylic acid or acryloyl chloride, such as tris-(2-hydroxyethyl) isocyanurate triacrylate (e.g., SR368, Sartomer Company, Inc.) and tris-(2-hydroxyethyl) isocyanurate diacrylate; alcohol polyacrylates with and without alkoxylation such as tricyclodecane dimethanol diacrylate (e.g., CD406, Sartomer Company, Inc.) and ethoxylated polyethylene glycol diacrylate with the degree of ethoxylation being 2 or greater; for example, ranging from 2 to 16; epoxy acrylates formed by adding acrylate to bisphenol-A diglycidylether and the like (e.g., Photomer 3016, IGM Resins); and single and multi-ring cyclic aromatic or non-aromatic polyacrylates such as dicyclopentadiene diacrylate and dicyclopentane diacrylate.

In some embodiments, the curable secondary coating composition includes a multifunctional monomer with

three or more curable functional groups in an amount greater than 2.0 wt%, or greater than 5.0 wt%, or greater than 7.5 wt%, or greater than 10 wt%, or greater than 15 wt%, or greater than 20 wt%, or in the range from 2.0 wt% to 25 wt%, or in the range from 5.0 wt% to 20 wt%, or in the range from 8.0 wt% to 15 wt%. In a preferred embodiment, each of the three or more curable functional groups is an acrylate group.

In some embodiments, the curable secondary coating composition includes a trifunctional monomer in an amount greater than 2.0 wt%, or greater than 5.0 wt%, or greater than 7.5 wt%, or greater than 10 wt%, or greater than 15 wt%, or greater than 20 wt%, or in the range from 2.0 wt% to 25 wt%, or in the range from 5.0 wt% to 20 wt%, or in the range from 8.0 wt% to 15 wt%. In a preferred embodiment, the trifunctional monomer is a triacrylate monomer.

In some embodiments, the curable secondary coating composition includes a difunctional monomer in an amount greater than 55 wt%, or greater than 60 wt%, or greater than 65 wt%, or greater than 70 wt%, or in the range from 55 wt% to 80 wt%, or in the range from 60 wt% to 75 wt%, and further includes a trifunctional monomer in an amount in the range from 2.0 wt% to 25 wt%, or in the range from 5.0 wt% to 20 wt%, or in the range from 8.0 wt% to 15 wt%. In a preferred embodiment, the difunctional monomer is a diacrylate monomer and the trifunctional monomer is a triacrylate monomer. Preferred diacrylate monomers include alkoxylated bisphenol-A diacrylates. Preferred triacrylate monomers include alkoxylated trimethylolpropane triacrylates and isocyanurate triacrylates. Preferably the curable secondary coating composition lacks an alkoxylated bisphenol-A diacrylate having a degree of alkoxylation greater than 17, or greater than 20, or greater than 25, or in the range from 15 to 40, or in the range from 20 to 35.

In some embodiments, the curable secondary coating composition lacks a monofunctional monomer and includes a difunctional monomer in an amount greater than 55 wt%, or greater than 60 wt%, or greater than 65 wt%, or greater than 70 wt%, or in the range from 55 wt% to 80 wt%, or in the range from 60 wt% to 75 wt%, and further includes a trifunctional monomer in an amount in the range from 2.0 wt% to 25 wt%, or in the range from 5.0 wt% to 20 wt%, or in the range from 8.0 wt% to 15 wt%. In a preferred embodiment, the difunctional monomer is a diacrylate monomer and the trifunctional monomer is a triacrylate monomer. Preferred diacrylate monomers include alkoxylated bisphenol-A diacrylates. Preferred triacrylate monomers include alkoxylated trimethylolpropane triacrylates and isocyanurate triacrylates. Preferably the curable secondary coating composition lacks an alkoxylated bisphenol-A diacrylate having a degree of alkoxylation greater than 17, or greater than 20, or greater than 25, or in the range from 15 to 40, or in the range from 20 to 35.

In some embodiments, the curable secondary coating composition includes two or more difunctional monomers in a combined amount greater than 70 wt%, or greater than 75 wt%, or greater than 80 wt%, or greater than 85 wt%, or in the range from 70 wt% to 95 wt%, or in the range from 75 wt% to 90 wt%, and further includes a trifunctional monomer in an amount in the range from 2.0 wt% to 25 wt%, or in the range from 5.0 wt% to 20 wt%, or in the range from 8.0 wt% to 15 wt%. In a preferred embodiment, the difunctional monomer is a diacrylate monomer and the trifunctional monomer is a triacrylate monomer. Preferred diacrylate monomers include alkoxylated bisphenol-A diacrylates. Preferred triacrylate monomers include alkoxylated trimethylolpropane triacrylates and isocyanurate triacrylates. Preferably the curable secondary coating composition lacks an alkoxylated bisphenol-A diacrylate having a degree of alkoxylation greater than 17, or greater than 20, or greater than 25, or in the range from 15 to 40, or in the range from 20 to 35.

In some embodiments, the curable secondary coating composition lacks a monofunctional monomer and includes two or more difunctional monomers in a combined amount greater than 70 wt%, or greater than 75 wt%, or greater than 80 wt%, or greater than 85 wt%, or in the range from 70 wt% to 95 wt%, or in the range from 75 wt% to 90 wt%, and further includes a trifunctional monomer in an amount in the range from 2.0 wt% to 25 wt%, or in the range from 5.0 wt% to 20 wt%, or in the range from 8.0 wt% to 15 wt%. In a preferred embodiment, the difunctional monomer is a diacrylate monomer and the trifunctional monomer is a triacrylate monomer. Preferred diacrylate monomers include alkoxylated bisphenol-A diacrylates. Preferred triacrylate monomers include alkoxylated trimethylolpropane triacrylates and isocyanurate triacrylates. Preferably the curable secondary coating composition lacks an alkoxylated bisphenol-A diacrylate having a degree of alkoxylation greater than 17, or greater than 20, or greater than 25, or in the range from 15 to 40, or in the range from 20 to 35.

In some embodiments, the curable secondary coating composition includes two or more difunctional monomers in a combined amount greater than 70 wt%, or greater than 75 wt%, or greater than 80 wt%, or greater than 85 wt%, or in the range from 70 wt% to 95 wt%, or in the range from 75 wt% to 90 wt%, and further includes two or more trifunctional monomers in a combined amount in the range from 2.0 wt% to 25 wt%, or in the range from 5.0 wt% to 20 wt%, or in the range from 8.0 wt% to 15 wt%. In a preferred embodiment, each of the two or more difunctional monomers is a diacrylate monomer and each of the two or more trifunctional monomers is a triacrylate monomer. Preferred diacrylate monomers include alkoxylated bisphenol-A diacrylates. Preferred triacrylate monomers include alkoxylated trimethylolpropane triacrylates and isocyanurate triacrylates. Preferably the curable secondary coating composition lacks an alkoxylated bisphenol-A diacrylate having a degree of alkoxylation greater than 17, or greater than 20, or greater than 25, or in the range from 15 to 40, or in the range from 20 to 35.

In some embodiments, the curable secondary coating composition lacks a monofunctional monomer and includes two or more difunctional monomers in a combined amount greater than 70 wt%, or greater than 75 wt%, or greater

than 80 wt%, or greater than 85 wt%, or in the range from 70 wt% to 95 wt%, or in the range from 75 wt% to 90 wt%, and further includes two or more trifunctional monomers in a combined amount in the range from 2.0 wt% to 25 wt%, or in the range from 5.0 wt% to 20 wt%, or in the range from 8.0 wt% to 15 wt%. In a preferred embodiment, the each of the difunctional monomers is a diacrylate monomer and each of the trifunctional monomers is a triacrylate monomer. Preferred diacrylate monomers include alkoxylated bisphenol-A diacrylates. Preferred triacrylate monomers include alkoxylated trimethylolpropane triacrylates and isocyanurate triacrylates. Preferably the curable secondary coating composition lacks an alkoxylated bisphenol-A diacrylate having a degree of alkoxylation greater than 17, or greater than 20, or greater than 25, or in the range from 15 to 40, or in the range from 20 to 35.

A preferred difunctional monomer is an alkoxylated bisphenol-A diacrylate. Alkoxylated bisphenol-A diacrylate has the general formula (I):

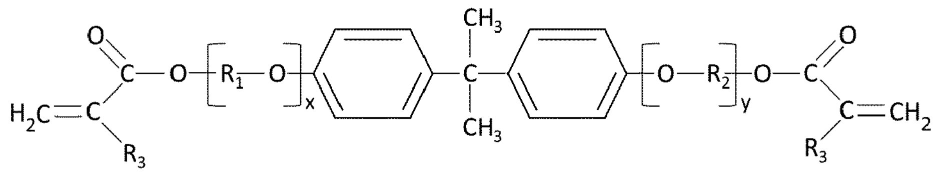

(I)

where $R_1$ and $R_2$ are alkylene groups, $R_1$-O and $R_2$-O are alkoxylene groups, and $R_3$ is H. Any two of the groups $R_1$, $R_2$, and $R_3$ are the same or different. In one embodiment, the groups $R_1$ and $R_2$ are the same. The number of carbons in each of the groups $R_1$ and $R_2$ is in the range from 1 to 8, or in the range from 2 to 6, or in the range from 2 to 4. The degree of alkoxylation is ½(x + y). The values of x and y are the same or different. In one embodiment, x and y are the same.

A preferred trifunctional monomer is an alkoxylated trimethylolpropane triacrylate. Alkoxylated trimethylolpropane triacrylate has the general formula (II):

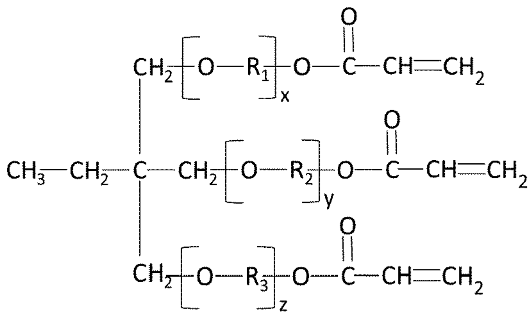

(II)

where where $R_1$ and $R_2$ are alkylene groups, O-$R_1$, O-$R_2$, and O-$R_3$ are alkoxylene groups. Any two of the groups $R_1$, $R_2$, and $R_3$ are the same or different. In one embodiment, the groups $R_1$, $R_2$, and $R_3$ are the same. The number of carbons in the each of the groups $R_1$, $R_2$, and $R_3$ is in the range from 1 to 8, or in the range from 2 to 6, or in the range from 2 to 4. The degree of alkoxylation is 1/3(x + y + z). The values of any two of x, y and z are the same or different. In one embodiment, x, y, and z are the same.

Another preferred trifunctional monomer is a tris[(acryloyloxy)alkyl] isocyanurate. Tris[(acryloyloxy)alkyl] isocyanurates are also referred to as tris[n-hydroxyalkyl) isocyanurate triacrylates. A representative tris[(acryloyloxy)alkyl] isocyanurate is tris[2-hydroxyethyl) isocyanurate triacrylate, which has the general formula (III):

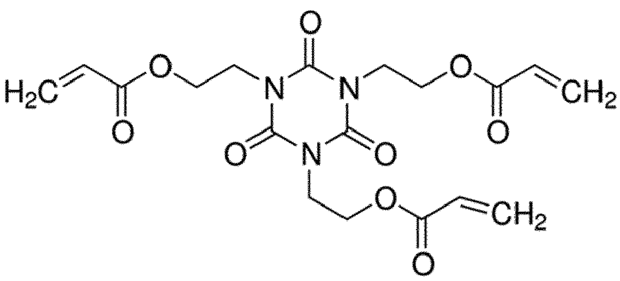

(III)

In formula (III), an ethylene linkage ($-CH_2-CH_2-$) bonds each acryloyloxy group to a nitrogen of the isocyanurate ring. In other embodiments of tris[(acryloyloxy)alkyl] isocyanurates, alkylene linkages other than ethylene bond the acryloyloxy

groups to nitrogen atoms of the isocyanurate ring. The alkylene linkages for any two of the three alkylene linkages are the same or different. In one embodiment, the three alkylene linkages are the same. The number of carbons in each of the alkylene linkages is in the range from 1 to 8, or in the range from 2 to 6, or in the range from 2 to 4.

In one embodiment, the curable secondary composition includes an alkoxylated bisphenol-A diacrylate monomer in an amount greater than 55 wt%, or greater than 60 wt%, or greater than 65 wt%, or greater than 70 wt%, or in the range from 55 wt% to 80 wt%, or in the range from 60 wt% to 75 wt%, and further includes an alkoxylated trimethylolpropane triacrylate monomer in an amount in the range from 2.0 wt% to 25 wt%, or in the range from 5.0 wt% to 20 wt%, or in the range from 8.0 wt% to 15 wt%. Preferably the curable secondary coating composition lacks an alkoxylated bisphenol-A diacrylate having a degree of alkoxylation greater than 17, or greater than 20, or greater than 25, or in the range from 15 to 40, or in the range from 20 to 35.

In one embodiment, the curable secondary composition includes an alkoxylated bisphenol-A diacrylate monomer in an amount greater than 55 wt%, or greater than 60 wt%, or greater than 65 wt%, or greater than 70 wt%, or in the range from 55 wt% to 80 wt%, or in the range from 60 wt% to 75 wt%, and further includes an ethoxylated trimethylolpropane triacrylate monomer in an amount in the range from 2.0 wt% to 25 wt%, or in the range from 5.0 wt% to 20 wt%, or in the range from 8.0 wt% to 15 wt%. Preferably the curable secondary coating composition lacks an alkoxylated bisphenol-A diacrylate having a degree of alkoxylation greater than 17, or greater than 20, or greater than 25, or in the range from 15 to 40, or in the range from 20 to 35.

In one embodiment, the curable secondary composition includes an ethoxylated bisphenol-A diacrylate monomer in an amount greater than 55 wt%, or greater than 60 wt%, or greater than 65 wt%, or greater than 70 wt%, or in the range from 55 wt% to 80 wt%, or in the range from 60 wt% to 75 wt%, and further includes an alkoxylated trimethylolpropane triacrylate monomer in an amount in the range from 2.0 wt% to 25 wt%, or in the range from 5.0 wt% to 20 wt%, or in the range from 8.0 wt% to 15 wt%. Preferably the curable secondary coating composition lacks an alkoxylated bisphenol-A diacrylate having a degree of alkoxylation greater than 17, or greater than 20, or greater than 25, or in the range from 15 to 40, or in the range from 20 to 35.

In one embodiment, the curable secondary composition includes an ethoxylated bisphenol-A diacrylate monomer in an amount greater than 55 wt%, or greater than 60 wt%, or greater than 65 wt%, or greater than 70 wt%, or in the range from 55 wt% to 80 wt%, or in the range from 60 wt% to 75 wt%, and further includes an ethoxylated trimethylolpropane triacrylate monomer in an amount in the range from 2.0 wt% to 25 wt%, or in the range from 5.0 wt% to 20 wt%, or in the range from 8.0 wt% to 15 wt%. Preferably the curable secondary coating composition lacks an alkoxylated bisphenol-A diacrylate having a degree of alkoxylation greater than 17, or greater than 20, or greater than 25, or in the range from 15 to 40, or in the range from 20 to 35.

In one embodiment, the curable secondary composition includes an alkoxylated bisphenol-A diacrylate monomer in an amount greater than 55 wt%, or greater than 60 wt%, or greater than 65 wt%, or greater than 70 wt%, or in the range from 55 wt% to 80 wt%, or in the range from 60 wt% to 75 wt%, and further includes a tris[(acryloyloxy)alkyl] isocyanurate monomer in an amount in the range from 2.0 wt% to 25 wt%, or in the range from 5.0 wt% to 20 wt%, or in the range from 8.0 wt% to 15 wt%. Preferably the curable secondary coating composition lacks an alkoxylated bisphenol-A diacrylate having a degree of alkoxylation greater than 17, or greater than 20, or greater than 25, or in the range from 15 to 40, or in the range from 20 to 35.

In one embodiment, the curable secondary composition includes an ethoxylated bisphenol-A diacrylate monomer in an amount greater than 55 wt%, or greater than 60 wt%, or greater than 65 wt%, or greater than 70 wt%, or in the range from 55 wt% to 80 wt%, or in the range from 60 wt% to 75 wt%, and further includes a tris[(acryloyloxy)alkyl] isocyanurate monomer in an amount in the range from 2.0 wt% to 25 wt%, or in the range from 5.0 wt% to 20 wt%, or in the range from 8.0 wt% to 15 wt%. Preferably the curable secondary coating composition lacks an alkoxylated bisphenol-A diacrylate having a degree of alkoxylation greater than 17, or greater than 20, or greater than 25, or in the range from 15 to 40, or in the range from 20 to 35.

In one embodiment, the curable secondary composition includes an alkoxylated bisphenol-A diacrylate monomer in an amount greater than 55 wt%, or greater than 60 wt%, or greater than 65 wt%, or greater than 70 wt%, or in the range from 55 wt% to 80 wt%, or in the range from 60 wt% to 75 wt%, and further includes tris(2-hydroxyethyl) isocyanurate triacrylate monomer in an amount in the range from 2.0 wt% to 25 wt%, or in the range from 5.0 wt% to 20 wt%, or in the range from 8.0 wt% to 15 wt%. Preferably the curable secondary coating composition lacks an alkoxylated bisphenol-A diacrylate having a degree of alkoxylation greater than 17, or greater than 20, or greater than 25, or in the range from 15 to 40, or in the range from 20 to 35.

In one embodiment, the curable secondary composition includes an ethoxylated bisphenol-A diacrylate monomer in an amount greater than 55 wt%, or greater than 60 wt%, or greater than 65 wt%, or greater than 70 wt%, or in the range from 55 wt% to 80 wt%, or in the range from 60 wt% to 75 wt%, and further includes a tris(2-hydroxyethyl) isocyanurate triacrylate monomer in an amount in the range from 2.0 wt% to 25 wt%, or in the range from 5.0 wt% to 20 wt%, or in the range from 8.0 wt% to 15 wt%. Preferably the curable secondary coating composition lacks an alkoxylated bisphenol-A diacrylate having a degree of alkoxylation greater than 17, or greater than 20, or greater than 25, or in the

range from 15 to 40, or in the range from 20 to 35.

In one embodiment, the curable secondary composition includes bisphenol-A epoxy diacrylate monomer in an amount greater than 5.0 wt%, or greater than 10 wt%, or greater than 15 wt%, or in the range from 5.0 wt% to 20 wt% or in the range from 8 wt% to 17 wt%, or in the range from 10 wt% to 15 wt%, and further includes an alkoxylated bisphenol-A diacrylate monomer in an amount greater than 55 wt%, or greater than 60 wt%, or greater than 65 wt%, or greater than 70 wt%, or in the range from 55 wt% to 80 wt%, or in the range from 60 wt% to 75 wt%, and further includes an alkoxylated trimethylolpropane triacrylate monomer in an amount in the range from 2.0 wt% to 25 wt%, or in the range from 5.0 wt% to 20 wt%, or in the range from 8.0 wt% to 15 wt%. Preferably the curable secondary coating composition lacks an alkoxylated bisphenol-A diacrylate having a degree of alkoxylation greater than 17, or greater than 20, or greater than 25, or in the range from 15 to 40, or in the range from 20 to 35.

In one embodiment, the curable secondary composition includes bisphenol-A epoxy diacrylate monomer in an amount greater than 5.0 wt%, or greater than 10 wt%, or greater than 15 wt%, or in the range from 5.0 wt% to 20 wt% or in the range from 8 wt% to 17 wt%, or in the range from 10 wt% to 15 wt%, and further includes an alkoxylated bisphenol-A diacrylate monomer in an amount greater than 55 wt%, or greater than 60 wt%, or greater than 65 wt%, or greater than 70 wt%, or in the range from 55 wt% to 80 wt%, or in the range from 60 wt% to 75 wt%, and further includes an ethoxylated trimethylolpropane triacrylate monomer in an amount in the range from 2.0 wt% to 25 wt%, or in the range from 5.0 wt% to 20 wt%, or in the range from 8.0 wt% to 15 wt%. Preferably the curable secondary coating composition lacks an alkoxylated bisphenol-A diacrylate having a degree of alkoxylation greater than 17, or greater than 20, or greater than 25, or in the range from 15 to 40, or in the range from 20 to 35.

In one embodiment, the curable secondary composition includes bisphenol-A epoxy diacrylate monomer in an amount greater than 5.0 wt%, or greater than 10 wt%, or greater than 15 wt%, or in the range from 5.0 wt% to 20 wt% or in the range from 8 wt% to 17 wt%, or in the range from 10 wt% to 15 wt%, and further includes an ethoxylated bisphenol-A diacrylate monomer in an amount greater than 55 wt%, or greater than 60 wt%, or greater than 65 wt%, or greater than 70 wt%, or in the range from 55 wt% to 80 wt%, or in the range from 60 wt% to 75 wt%, and further includes an alkoxylated trimethylolpropane triacrylate monomer in an amount in the range from 2.0 wt% to 25 wt%, or in the range from 5.0 wt% to 20 wt%, or in the range from 8.0 wt% to 15 wt%. Preferably the curable secondary coating composition lacks an alkoxylated bisphenol-A diacrylate having a degree of alkoxylation greater than 17, or greater than 20, or greater than 25, or in the range from 15 to 40, or in the range from 20 to 35.

In one embodiment, the curable secondary composition includes bisphenol-A epoxy diacrylate monomer in an amount greater than 5.0 wt%, or greater than 10 wt%, or greater than 15 wt%, or in the range from 5.0 wt% to 20 wt% or in the range from 8 wt% to 17 wt%, or in the range from 10 wt% to 15 wt%, and further includes an ethoxylated bisphenol-A diacrylate monomer in an amount greater than 55 wt%, or greater than 60 wt%, or greater than 65 wt%, or greater than 70 wt%, or in the range from 55 wt% to 80 wt%, or in the range from 60 wt% to 75 wt%, and further includes an ethoxylated trimethylolpropane triacrylate monomer in an amount in the range from 2.0 wt% to 25 wt%, or in the range from 5.0 wt% to 20 wt%, or in the range from 8.0 wt% to 15 wt%. Preferably the curable secondary coating composition lacks an alkoxylated bisphenol-A diacrylate having a degree of alkoxylation greater than 17, or greater than 20, or greater than 25, or in the range from 15 to 40, or in the range from 20 to 35.

In one embodiment, the curable secondary composition includes bisphenol-A epoxy diacrylate monomer in an amount greater than 5.0 wt%, or greater than 10 wt%, or greater than 15 wt%, or in the range from 5.0 wt% to 20 wt% or in the range from 8 wt% to 17 wt%, or in the range from 10 wt% to 15 wt%, and further includes an alkoxylated bisphenol-A diacrylate monomer in an amount greater than 55 wt%, or greater than 60 wt%, or greater than 65 wt%, or greater than 70 wt%, or in the range from 55 wt% to 80 wt%, or in the range from 60 wt% to 75 wt%, and further includes a tris[(acryloyloxy)alkyl] isocyanurate monomer in an amount in the range from 2.0 wt% to 25 wt%, or in the range from 5.0 wt% to 20 wt%, or in the range from 8.0 wt% to 15 wt%. Preferably the curable secondary coating composition lacks an alkoxylated bisphenol-A diacrylate having a degree of alkoxylation greater than 17, or greater than 20, or greater than 25, or in the range from 15 to 40, or in the range from 20 to 35.

In one embodiment, the curable secondary composition includes bisphenol-A epoxy diacrylate monomer in an amount greater than 5.0 wt%, or greater than 10 wt%, or greater than 15 wt%, or in the range from 5.0 wt% to 20 wt% or in the range from 8 wt% to 17 wt%, or in the range from 10 wt% to 15 wt%, and further includes an ethoxylated bisphenol-A diacrylate monomer in an amount greater than 55 wt%, or greater than 60 wt%, or greater than 65 wt%, or greater than 70 wt%, or in the range from 55 wt% to 80 wt%, or in the range from 60 wt% to 75 wt%, and further includes a tris[(acryloyloxy)alkyl] isocyanurate monomer in an amount in the range from 2.0 wt% to 25 wt%, or in the range from 5.0 wt% to 20 wt%, or in the range from 8.0 wt% to 15 wt%. Preferably the curable secondary coating composition lacks an alkoxylated bisphenol-A diacrylate having a degree of alkoxylation greater than 17, or greater than 20, or greater than 25, or in the range from 15 to 40, or in the range from 20 to 35.

In one embodiment, the curable secondary composition includes bisphenol-A epoxy diacrylate monomer in an amount greater than 5.0 wt%, or greater than 10 wt%, or greater than 15 wt%, or in the range from 5.0 wt% to 20 wt% or in the range from 8 wt% to 17 wt%, or in the range from 10 wt% to 15 wt%, and further includes an alkoxylated

bisphenol-A diacrylate monomer in an amount greater than 55 wt%, or greater than 60 wt%, or greater than 65 wt%, or greater than 70 wt%, or in the range from 55 wt% to 80 wt%, or in the range from 60 wt% to 75 wt%, and further includes tris(2-hydroxyethyl) isocyanurate triacrylate monomer in an amount in the range from 2.0 wt% to 25 wt%, or in the range from 5.0 wt% to 20 wt%, or in the range from 8.0 wt% to 15 wt%. Preferably the curable secondary coating composition lacks an alkoxylated bisphenol-A diacrylate having a degree of alkoxylation greater than 17, or greater than 20, or greater than 25, or in the range from 15 to 40, or in the range from 20 to 35.

In one embodiment, the curable secondary composition includes bisphenol-A epoxy diacrylate monomer in an amount greater than 5.0 wt%, or greater than 10 wt%, or greater than 15 wt%, or in the range from 5.0 wt% to 20 wt% or in the range from 8 wt% to 17 wt%, or in the range from 10 wt% to 15 wt%, and further includes an ethoxylated bisphenol-A diacrylate monomer in an amount greater than 55 wt%, or greater than 60 wt%, or greater than 65 wt%, or greater than 70 wt%, or in the range from 55 wt% to 80 wt%, or in the range from 60 wt% to 75 wt%, and further includes a tris(2-hydroxyethyl) isocyanurate triacrylate monomer in an amount in the range from 2.0 wt% to 25 wt%, or in the range from 5.0 wt% to 20 wt%, or in the range from 8.0 wt% to 15 wt%. Preferably the curable secondary coating composition lacks an alkoxylated bisphenol-A diacrylate having a degree of alkoxylation greater than 17, or greater than 20, or greater than 25, or in the range from 15 to 40, or in the range from 20 to 35.

Representative photoinitiators include 1-hydroxycyclohexylphenyl ketone (e.g., IRGACURE 184 available from BASF)); bis(2,6-dimethoxybenzoyl)-2,4,4-trimethylpentylphosphine oxide (e.g., commercial blends IRGACURE 1800, 1850, and 1700 available from BASF); 2,2-dimethoxy-2-phenylacetophenone (e.g., IRGACURE 651, available from BASF); bis(2,4,6-trimethylbenzoyl)-phenylphosphine oxide (IRGACURE 819); (2,4,6-trimethylbenzoyl)diphenyl phosphine oxide (LUCIRIN TPO, available from BASF (Munich, Germany)); ethoxy(2,4,6-trimethylbenzoyl)-phenylphosphine oxide (LUCIRIN TPO-L from BASF); and combinations thereof.

The curable secondary coating composition includes a single photoinitiator or a combination of two or more photoinitiators. The total photoinitiator content of the curable secondary coating composition is up to about 10 wt%, or between about 0.5 wt% and about 6 wt%.

Optional additives include a strength additive, an antioxidant, a catalyst, a stabilizer, an optical brightener, a property-enhancing additive, an amine synergist, a wax, a lubricant, and/or a slip agent. Some additives operate to control the polymerization process, thereby affecting the physical properties (e.g., modulus, glass transition temperature) of the polymerization product formed from the coating composition. Other additives affect the integrity of the cured product of the curable secondary coating composition (e.g., protect against de-polymerization or oxidative degradation).

A representative antioxidant is thiodiethylene bis[3-(3,5-di-tert-butyl)-4-hydroxy-phenyl) propionate] (e.g., IRGANOX 1035, available from BASF). In some aspects, an antioxidant is present in the curable secondary coating composition in an amount greater than 0.25 wt%, or greater than 0.50 wt%, or greater than 0.75 wt%, or greater than 1.0 wt%, or an amount in the range from 0.25 wt% to 3.0 wt%, or an amount in the range from 0.50 wt% to 2.0 wt%, or an amount in the range from 0.75 wt% to 1.5 wt%.

Representative optical brighteners include TINOPAL OB (available from BASF); Blankophor KLA (available from Bayer); bisbenzoxazole compounds; phenylcoumarin compounds; and bis(styryl)biphenyl compounds. In an embodiment, the optical brightener is present in the curable secondary coating composition at a concentration of 0.005 wt% to 0.3 wt%. Representative amine synergists include triethanolamine; 1,4-diazabicyclo[2.2.2]octane (DABCO), triethylamine, and methyldiethanolamine. In an embodiment, an amine synergist is present at a concentration of 0.02 wt% to 0.5 wt%.

*Secondary Coating - Properties.* Relevant properties of the secondary coating include Young's modulus, tensile strength, yield strength, elongation at yield, glass transition temperature, fracture toughness, puncture resistance, and static mechanical damage resistance. The measurement techniques for each of these properties is described below and values obtained for representative secondary coatings disclosed herein are provided in the examples that follow.

Tensile Properties. The curable secondary coating compositions were cured and configured in the form of rod samples for measurement of Young's modulus, tensile strength, yield strength, and elongation at yield. The cured rods were prepared by injecting the curable secondary composition into Teflon® tubing having an inner diameter of about 0.025". The rod samples were cured using a Fusion D bulb at a dose of about 2.4 J/$cm^2$ (measured over a wavelength range of 225-424 nm by a Light Bug model IL390 from International Light). After curing, the Teflon® tubing was stripped away to provide a cured rod sample of the secondary coating composition. The cured rods were allowed to condition for 18-24 hours at 23°C and 50% relative humidity before testing. Young's modulus, tensile strength at break, yield strength, and elongation at yield were measured using a Sintech MTS Tensile Tester on defect-free rod samples with a gauge length of 51 mm, and a test speed of 250 mm/min. Tensile properties were measured according to ASTM Standard D882-97. The properties were determined as an average of at least five samples, with defective samples being excluded from the average.

Glass Transition Temperature. In situ $T_g$ measurements were performed on fiber tube-off samples obtained from coated fibers. The coated fibers included a glass fiber having a diameter of 125 μm, a primary coating with thickness 32.5 μm surrounding and in direct contact with the glass fiber, and a secondary coating with thickness 26.0 μm surrounding

and in direct contact with the glass fiber. The glass fiber and primary coating were the same for all samples measured. Samples with a comparative secondary coating and a secondary coating in accordance with the present disclosure were measured.

The fiber tube-off samples were obtained using the following procedure: a 0.0055" Miller stripper was clamped down approximately 1 inch from the end of the coated fiber. The one-inch region of fiber was plunged into a stream of liquid nitrogen and held in the liquid nitrogen for 3 seconds. The coated fiber was then removed from the stream of liquid nitrogen and quickly stripped to remove the coating. The stripped end of the fiber was inspected for residual coating. If residual coating remained on the glass fiber, the sample was discarded and a new sample was prepared. The result of the stripping process was a clean glass fiber and a hollow tube of stripped coating that included intact primary and secondary coatings. The hollow tube is referred to as a "tube-off sample". The glass, primary and secondary coating diameter were measured from the end-face of the unstripped fiber.

In-situ Tg of the tube-off samples was run using a Rheometrics DMTA IV test instrument at a sample gauge length of 9 to 10 mm. The width, thickness, and length of the tube-off sample were input to the operating program of the test instrument. The tube-off sample was mounted and then cooled to approximately -85 °C. Once stable, the temperature ramp was run using the following parameters:

Frequency: 1 Hz
Strain: 0.3%
Heating Rate: 2 °C/min.
Final Temperature: 150 °C
Initial Static Force = 20.0 g
Static > Dynamic Force by = 10.0%

The in-situ Tg of a coating is defined as the maximum value of tan δ in a plot of tan δ as a function of temperature, where tan δ is defined as:

$$\tan \delta = E''/E'$$

and E" is the loss modulus, which is proportional to the loss of energy as heat in a cycle of deformation and E' is the storage or elastic modulus, which is proportional to the energy stored in a cycle of deformation.

The tube-off samples exhibited distinct maxima in the tan δ plot for the primary and secondary coatings. The maximum at lower temperature (about -50 °C) corresponded to the in-situ Tg for the primary coating and the maximum at higher temperature (above 50 °C) corresponded to the in-situ Tg for the secondary coating.

Fracture Toughness. The resistance of a material to unstable crack growth is characterized by fracture toughness ($K_c$). The fracture toughness of a material relates to the energy required to propagate a crack in a material under tension. The higher the value of fracture toughness is, the more resistant to crack growth a material is. Fracture toughness was measured on film samples having a center cut notch geometry. Fracture toughness is given by:

$$K_c = Y\sigma\sqrt{a}$$

where Y is a parameter describing the geometry of crack and the loading condition, σ is the tensile strength at failure, and a is the crack length at failure. For a film with a through flaw of 2a, the geometry factor Y is given by:

$$Y = 1.77 - 0.177(2\lambda) + 1.77(2\lambda)^2$$

where

$$\lambda = \frac{a}{Sample\ Width}.$$

Film samples for fracture toughness were prepared by drawing down the curable secondary compositions on a glass plate to a thickness of 250 μm. The films were cured using a Fusion D lamp at a dose of 1200 mJ/cm$^2$ under a nitrogen purge. The cured films were conditioned overnight in a controlled environment at 23 °C and a relative humidity of 50% before testing. The resulting film samples had a thickness of about 250 μm, a width of 52 mm, and a length

greater than 75 mm.

The configuration of a film sample for measurement of fracture toughness is shown in FIG. 4. Film sample 50 with width 52 and gauge length 54 was secured by grips 56 of a tensile testing instrument. Fracture toughness was measured on the film sample 50 by first forming a center cut notch 58 and then pulling the notched film samples to failure in tension using a tensile testing instrument (Sinclair MTS Tensile Tester). The notch 58 was formed in the center of the film sample and oriented parallel to the width 52 as shown in FIG. 4. The notch 52 was formed with a sharp blade using a template to control notch length. Film samples with notches of length 18 mm, 24 mm, and 30 mm were tested. The notched film samples were gripped with grips 56 of the tensile testing instrument to provide a gauge length 54 of 75 mm for the measurements. The grips 56 were displaced at a rate of 2.0 mm/min to apply tension to the notch. The tensile strength at failure ($\sigma$) and notch length at failure (a) were measured and used to compute fracture toughness $K_c$. Fracture toughness $K_c$ reported herein is an average of results obtained for the three different notch lengths.

Puncture Resistance of Secondary Coating. Puncture resistance measurements were made on samples that included a glass fiber, a primary coating, and a secondary coating. The glass fiber had a diameter of 125 $\mu$m. The primary coating was formed from the reference primary coating composition listed in Table 1 below. Samples with various secondary coatings were prepared as described below. The thicknesses of the primary coating and secondary coating were adjusted to vary the cross-sectional area of the secondary coating as described below. The ratio of the thickness of the secondary coating to the thickness of the primary coating was maintained at about 0.8 for all samples.

The puncture resistance was measured using the technique described in the article entitled "Quantifying the Puncture Resistance of Optical Fiber Coatings", by G. Scott Glaesemann and Donald A. Clark, published in the Proceedings of the 52nd International Wire & Cable Symposium, pp. 237-245 (2003). A summary of the method is provided here. The method is an indentation method. A 4-centimeter length of optical fiber was placed on a 3 mm-thick glass slide. One end of the optical fiber was attached to a device that permitted rotation of the optical fiber in a controlled fashion. The optical fiber was examined in transmission under 100X magnification and rotated until the secondary coating thickness was equivalent on both sides of the glass fiber in a direction parallel to the glass slide. In this position, the thickness of the secondary coating was equal on both sides of the optical fiber in a direction parallel to the glass slide. The thickness of the secondary coating in the directions normal to the glass slide and above or below the glass fiber differed from the thickness of the secondary coating in the direction parallel to the glass slide. One of the thicknesses in the direction normal to the glass slide was greater and the other of the thicknesses in the direction normal to the glass slide was less than the thickness in the direction parallel to the glass slide. This position of the optical fiber was fixed by taping the optical fiber to the glass slide at both ends and is the position of the optical fiber used for the indentation test.

Indentation was carried out using a universal testing machine (Instron model 5500R or equivalent). An inverted microscope was placed beneath the crosshead of the testing machine. The objective of the microscope was positioned directly beneath a 75° diamond wedge indenter that was installed in the testing machine. The glass slide with taped fiber was placed on the microscope stage and positioned directly beneath the indenter such that the width of the indenter wedge was orthogonal to the direction of the optical fiber. With the optical fiber in place, the diamond wedge was lowered until it contacted the surface of the secondary coating. The diamond wedge was then driven into the secondary coating at a rate of 0.1 mm/min and the load on the secondary coating was measured. The load on the secondary coating increased as the diamond wedge was driven deeper into the secondary coating until puncture occurred, at which point a precipitous decrease in load was observed. The indentation load at which puncture was observed was recorded and is reported herein as grams of force (g) and referred to herein as "puncture load". The experiment was repeated with the optical fiber in the same orientation to obtain ten measurement points, which were averaged to determine a puncture load for the orientation. A second set of ten measurement points was taken by rotating the orientation of the optical fiber by 180°.

Static Mechanical Damage Resistance. The static damage resistance test was performed using an apparatus similar to US5908484, US6243523, and US6289158, the disclosures of which are incorporated by reference herein. The static damage resistance was determined according to the method reported by Tabaddor et al. in Proc. 47th IWCS, p. 725 (1998). In this test, a coated fiber was laid horizontally on a glass slide at room temperature and placed under a tension of 5 g. The coated fibers included a glass fiber having a diameter of 125 $\mu$m, a primary coating with thickness 32.5 $\mu$m surrounding and in direct contact with the glass fiber, and a secondary coating with thickness 26.0 surrounding and in direct contact with the glass fiber. The glass fiber and primary coating were the same for all samples measured and corresponded to the glass fiber and primary coating used in the measurement of $T_g$ described above. Samples with a comparative secondary coating and a secondary coating in accordance with the present disclosure were measured. The thickness of the coating was. A ¼-inch diameter steel rod was aligned perpendicularly above the coated fiber. The rod was loaded with a desired test weight, lowered to contact the coated fiber, held in place for 5 seconds, and released. For each loaded weight, 30 sites (spaced apart by 1/8 inch) along the coated fiber were tested. Observations of damage were recorded using real time video, and final inspections were made under a compound microscope after testing was completed. The force for 50% damage (D50), corresponding to the load causing damage to 50% of the test sites, was calculated by plotting the probability of damage (fraction of damaged test sites) versus load in grams.

*Fiber Draw Process.* In a continuous optical fiber manufacturing process, a glass fiber is drawn from a heated preform and sized to a target diameter (typically 125 μm). The glass fiber is then cooled and directed to a coating system that applies a liquid primary coating composition to the glass fiber. Two process options are viable after application of the liquid primary coating composition to the glass fiber. In one process option (wet-on-dry process), the liquid primary coating composition is cured to form a solidified primary coating, the liquid secondary coating composition is applied to the cured primary coating, and the liquid secondary coating composition is cured to form a solidified secondary coating. In a second process option (wet-on-wet process), the liquid secondary coating composition is applied to the liquid primary coating composition, and both liquid coating compositions are cured simultaneously to provide solidified primary and secondary coatings. After the fiber exits the coating system, the fiber is collected and stored at room temperature. Collection of the fiber typically entails winding the fiber on a spool and storing the spool.

In some processes, the coating system further applies a tertiary coating composition to the secondary coating and cures the tertiary coating composition to form a solidified tertiary coating. Typically, the tertiary coating is an ink layer used to mark the fiber for identification purposes and has a composition that includes a pigment and is otherwise similar to the secondary coating. The tertiary coating is applied to the secondary coating and cured. The secondary coating has typically been cured at the time of application of the tertiary coating. The primary, secondary, and tertiary coating compositions can be applied and cured in a common continuous manufacturing process. Alternatively, the primary and secondary coating compositions are applied and cured in a common continuous manufacturing process, the coated fiber is collected, and the tertiary coating composition is applied and cured in a separate offline process to form the tertiary coating.

The wavelength of curing radiation is infrared, visible, or ultraviolet (UV). Representative wavelengths include wavelengths in the range from 250 nm to 1000 nm, or in the range from 250 nm to 700 nm, or in the range from 250 nm to 450 nm, or in the range from 275 nm to 425 nm, or in the range from 300 nm to 400 nm, or in the range from 320 nm to 390 nm, or in the range from 330 nm to 380 nm, or in the range from 340 nm to 370 nm. Curing can be accomplished with light sources that include a lamp source (e.g. Hg lamp), an LED source (e.g. a UVLED, visible LED, or infrared LED), or a laser source.

Each of the primary, secondary, and tertiary compositions are curable with any of the wavelengths and any of the light sources referred to above. The same wavelength or source can be used to cure each of the primary, secondary, and tertiary compositions, or different wavelengths and/or different sources can be used to cure the primary, secondary, and tertiary compositions. Curing of the primary, secondary, and tertiary compositions can be accomplished with a single wavelength or a combination of two or more wavelengths.

To improve process efficiency, it is desirable to increase the draw speed of the fiber along the process pathway extending from the preform to the collection point. As the draw speed increases, however, the cure speed of coating compositions must increase. The coating compositions disclosed herein are compatible with fiber draw processes that operate at a draw speed greater than 35 m/s, or greater than 40 m/s, or greater than 45 m/s, or greater than 50 m/s, or greater than 55 m/s, or greater than 60 m/s, or greater than 65 m/s, or greater than 70 m/s.

The present disclosure extends to optical fibers coated with the cured product of the curable secondary coating compositions. The optical fiber includes a waveguiding glass fiber with a higher index glass core region surrounded by a lower index glass cladding region. A coating formed as a cured product of the curable secondary coating compositions surrounds and is in direct contact with a primary coating, which is in direct contact with the glass cladding. The cured product of the curable secondary coating compositions can also function as a tertiary coating of the glass fiber.

## Examples

The following examples illustrate preparation of a representative curable secondary coating compositions and cured products made therefrom. Selected properties of the cured products based on the measurement techniques described above are also presented. Corresponding properties of comparative coatings are also presented.

*Reference Primary Coating.* In measurements of glass transition temperature ($T_g$), static mechanical damage resistance (D50) and puncture resistance, the measurement samples included a primary coating between the glass fiber and a secondary coating. The primary coating composition had the formulation given in Table 1 and is typical of commercially available primary coating compositions.

**Table 1 - Reference Primary Coating Composition**

| Component | Amount |
|---|---|
| Oligomeric Material | 50.0 wt% |
| SR504 | 46.5 wt% |
| NVC | 2.0 wt% |

(continued)

| Component | Amount |
|---|---|
| TPO | 1.5 wt% |
| Irganox 1035 | 1.0 pph |
| 3-Acryloxypropyl trimethoxysilane | 0.8 pph |
| Pentaerythritol tetrakis(3-mercapto propionate) | 0.032 pph |

where the oligomeric material was prepared as described above from H12MDI, HEA, and PPG4000 using a molar ratio n:m:p = 3.5:3.0:2.0, SR504 is ethoxylated(4)nonylphenol acrylate (available from Sartomer), NVC is N-vinylcaprolactam (available from Aldrich), TPO (a photoinitiator) is (2,4,6-trimethylbenzoyl)-diphenyl phosphine oxide (available from BASF), Irganox 1035 (an antioxidant) is benzenepropanoic acid, 3,5-bis(1,1-dimethylethyl)-4-hydroxythiodi-2,1-ethanediyl ester (available from BASF), 3-acryloxypropyl trimethoxysilane is an adhesion promoter (available from Gelest), and pentaerythritol tetrakis(3-mercaptopropionate) (also known as tetrathiol, available from Aldrich) is a chain transfer agent. The concentration unit "pph" refers to an amount relative to a base composition that includes all monomers, oligomers, and photoinitiators. For example, a concentration of 1.0 pph for Irganox 1035 corresponds to 1 g Irganox 1035 per 100 g combined of oligomeric material, SR504, NVC, and TPO.

*Secondary Coating - Compositions.* A comparative curable secondary coating composition (A) and three representative curable secondary coating compositions (SB, SC, and SD) within the scope of the disclosure are listed in Table 2.

**Table 2 - Secondary Coating Compositions**

| | Composition | | | |
|---|---|---|---|---|
| Component | A | SB | SC | SD |
| PE210 (wt%) | 15.0 | 15.0 | 15.0 | 15.0 |
| M240 (wt%) | 72.0 | 72.0 | 72.0 | 62.0 |
| M2300 (wt%) | 10.0 | - | - | - |
| M3130 (wt%) | - | 10.0 | - | - |
| M370 (wt%) | - | - | 10.0 | 10.0 |
| TPO (wt%) | 1.5 | 1.5 | 1.5 | 1.5 |
| Irgacure 184 (wt%) | 1.5 | 1.5 | 1.5 | 1.5 |
| Irganox 1035 (pph) | 0.5 | 0.5 | 0.5 | 0.5 |
| DC-190 (pph) | 1.0 | 1.0 | 1.0 | 1.0 |

PE210 is bisphenol-A epoxy diacrylate (available from Miwon Specialty Chemical, Korea), M240 is ethoxylated (4) bisphenol-A diacrylate (available from Miwon Specialty Chemical, Korea), M2300 is ethoxylated (30) bisphenol-A diacrylate (available from Miwon Specialty Chemical, Korea), M3130 is ethoxylated (3) trimethylolpropane triacrylate (available from Miwon Specialty Chemical, Korea), TPO (a photoinitiator) is (2,4,6-trimethylbenzoyl)diphenyl phosphine oxide (available from BASF), Irgacure 184 (a photoinitiator) is 1-hydroxycyclohexyl-phenyl ketone (available from BASF), Irganox 1035 (an antioxidant) is benzenepropanoic acid, 3,5-bis(1,1-dimethylethyl)-4-hydroxythiodi-2,1-ethanediyl ester (available from BASF). DC190 (slip agent) is silicone-ethylene oxide/propylene oxide copolymer (available from Dow Chemical). The concentration unit "pph" refers to an amount relative to a base composition that includes all monomers and photoinitiators. For example, for secondary coating composition A, a concentration of 1.0 pph for DC-190 corresponds to 1 g DC-190 per 100 g combined of PE210, M240, M2300, TPO, and Irgacure 184.

*Secondary Coatings - Tensile Properties and Fracture Toughness ($K_C$).* The Young's modulus, tensile strength, yield strength, elongation at yield, and fracture toughness of secondary coatings made from secondary compositions A, SB, SC, and SD were measured using the technique described above. The results are summarized in Table 3.

**Table 3 - Properties of Secondary Coatings**

| | Secondary Composition | | | |
|---|---|---|---|---|
| Property | A | SB | SC | SD |
| Young's Modulus (MPa) | 2049 | 2532 | 2653 | 2776 |
| Tensile Strength (MPa) | 86.09 | 75.56 | 82.02 | 86.08 |
| Yield Strength (MPa) | 48.21 | 61.23 | 66.37 | 70.05 |
| Elongation at yield (%) | 4.60 | 4.53 | 4.76 | 4.87 |
| Fracture Toughness (MPa-$m^{0.5}$) | 0.8580 | 0.8801 | 0.9471 | 0.9016 |

The results show that secondary coatings prepared from compositions SB, SC, and SD exhibited higher Young's modulus, higher yield strength and higher fracture toughness than the secondary coating prepared from comparative composition A. The higher values represent improvements that make secondary coatings prepared for the curable coating compositions disclosed herein better suited for small diameter optical fibers. More specifically, the higher values enable use of thinner secondary coatings on optical fibers without sacrificing performance. Thinner secondary coatings reduce the overall diameter of the optical fiber and provide higher fiber counts in cables of a given cross-sectional area.

The Young's modulus of secondary coatings prepared as cured products from the curable secondary coating compositions disclosed herein is greater than 2400 MPa, or greater than 2500 MPa, or greater than 2600 MPa, or greater than 2700 MPa, or in the range from 2400 MPa to 3000 MPa, or in the range from 2600 MPa to 2800 MPa.

The yield strength of secondary coatings prepared as cured products from the curable secondary coating compositions disclosed herein is greater than 55 MPa, or greater than 60 MPa, or greater than 65 MPa, or greater than 70 MPa, or in the range from 55 MPa to 75 MPa, or in the range from 60 MPa to 70 MPa.

The fracture toughness of secondary coatings prepared as cured products from the curable secondary coating compositions disclosed herein is greater than 0.87 MPa-$m^{0.5}$, or greater than 0.90 MPa-$m^{0.5}$, or greater than 0.93 MPa-$m^{0.5}$, or in the range from 0.87 MPa-$m^{0.5}$ to 0.97 MPa-$m^{0.5}$, or in the range from 0.90 MPa-$m^{0.5}$ to 0.95 MPa-$m^{0.5}$.

In an embodiment, the secondary coatings prepared from the curable secondary coating compositions disclosed herein have a Young's modulus greater than 2400 MPa, a yield strength greater than 55 MPa, and a fracture toughness greater than 0.87 MPa-$m^{0.5}$. In another embodiment, the secondary coatings prepared from the curable secondary coating compositions disclosed herein have a Young's modulus greater than 2500 MPa, a yield strength greater than 60 MPa, and a fracture toughness greater than 0.90 MPa-$m^{0.5}$. In a further embodiment, the secondary coatings prepared from the curable secondary coating compositions disclosed herein have a Young's modulus greater than 2600 MPa, a yield strength greater than 65 MPa, and a fracture toughness greater than 0.93 MPa-$m^{0.5}$.

*Secondary Coatings - Properties - In Situ Glass Transition Temperature ($T_g$).* The *in situ* glass transition temperature of two fiber samples were determined. Each fiber sample included a glass fiber with a diameter of 125 $\mu$m and the reference primary coating described above (with thickness 32.5 $\mu$m) formed in direct contact with the glass fiber. One fiber sample included a secondary coating formed from comparative curable secondary composition A and the other fiber sample included a secondary coating formed from curable secondary composition SD. Each secondary coating composition was in direct contact with the reference primary coating and had a thickness of 26.5 $\mu$m.

The *in situ* glass transition temperatures of the two fiber samples were measured according to the procedure described above and the results are shown in FIG. 5. FIG. 5 shows a plot of tan $\delta$ as a function of temperature for the two fiber samples. Trace 62 shows the result for the fiber sample with a secondary coating formed from comparative curable secondary coating composition A and trace 64 shows the result for the fiber sample with a secondary coating formed from curable secondary coating composition SD. A peak at low temperature is observed in Trace 62 and Trace 64. The maximum of the low temperature peak corresponds to the *in situ* glass transition temperature of the primary coating (approximately -50 °C). The maxima of the peaks at higher temperature correspond to the *in situ* glass transition temperature of the secondary coating. Trace 62 indicates that the *in situ* glass transition temperature of the secondary coating formed from the comparative curable secondary coating composition A is about 74 °C. Trace 64 indicates that the *in situ* glass transition temperature of the secondary coating formed from curable secondary coating composition SD is about 113 °C. A significantly higher in situ glass transition temperature is observed for secondary coatings formed from the curable secondary coating compositions disclosed herein. A higher *in situ* glass transition temperature is advantageous because it facilitates stripping of the coating from the glass fiber during splicing and connectorizing applications.

The *in situ* glass transition temperature of secondary coatings formed as cured products of the curable secondary coating compositions disclosed herein is greater than 80 °C, or greater than 90 °C, or greater than 100 °C, or greater than 110 °C, or in the range from greater than 80 °C to 125 °C, or in the range from greater than 85 °C to 120 °C, or in

the range from greater than 90 °C to 110 °C.

*Secondary Coatings - Properties - Puncture Resistance.* The puncture resistance of secondary coatings made from comparative curable secondary coating composition A, a commercial curable secondary coating composition (CPC6e) from a commercial vendor (DSM Desotech) having a proprietary composition, and curable secondary coating composition SD was determined according to the method described above. Several fiber samples with each of the three secondary coatings were prepared. Each fiber sample included a glass fiber with a diameter of 125 μm, a primary coating formed from the reference primary coating composition listed in Table 1, and one of the secondary coatings. The thicknesses of the primary coating and secondary coating were adjusted to vary the cross-sectional area of the secondary coating as shown in FIG. 6. The ratio of the thickness of the secondary coating to the thickness of the primary coating was maintained at about 0.8 for all samples.

Fiber samples with a range of thicknesses were prepared for each of the secondary coatings to determine the dependence of puncture load on the thickness of the secondary coating. One strategy for achieving higher fiber count in cables is to reduce the thickness of the secondary coating. As the thickness of the secondary coating is decreased, however, its performance diminishes and its protective function is compromised. Puncture resistance is a measure of the protective function of a secondary coating. A secondary coating with a high puncture resistance withstands greater impact without failing and provides better protection for the glass fiber. The puncture load as a function of cross-sectional area for the three coatings is shown in FIG. 6. Cross-sectional area is selected as a parameter for reporting puncture load because an approximately linear correlation of puncture load with cross-sectional area of the secondary coating was observed. Traces 72, 74, and 76 shows the approximate linear dependence of puncture load on cross-sectional area for the comparative secondary coatings obtained by curing the comparative CPC6e secondary coating composition, the comparative curable secondary coating composition A, and curable secondary coating composition SD; respectively. The vertical dashed lines are provided as guides to the eye at cross-sectional areas of 10000 $\mu m^2$, 15000 $\mu m^2$, and 20000 $\mu m^2$ as indicated.

The CPC6e secondary coating depicted in Trace 72 corresponds to a conventional secondary coating known in the art. The comparative secondary coating A depicted in Trace 74 shows an improvement in puncture load for high cross-sectional areas. The improvement, however, diminishes as the cross-sectional area decreases. This indicates that a secondary coating obtained as a cured product from comparative curable secondary coating composition A is unlikely to be suitable for low diameter, high fiber count applications. Trace 76, in contrast, shows a significant increase in puncture load for the secondary coating obtained as a cured product from curable secondary coating composition SD. At a cross-sectional area of 7000 $\mu m^2$, for example, the puncture load of the secondary coating obtained from curable secondary coating composition SD is 50% or more greater than the puncture load of either of the other two secondary coatings.

The puncture load of secondary coatings formed as cured products of the curable secondary coating compositions disclosed herein at a cross-sectional area of 10000 $\mu m^2$ is greater than 36 g, or greater than 40 g, or greater than 44 g, or greater than 48 g, or in the range from 36 g to 52 g, or in the range from 40 g to 48 g. The puncture load of secondary coatings formed as cured products of the curable secondary coating compositions disclosed herein at a cross-sectional area of 15000 $\mu m^2$ is greater than 56 g, or greater than 60 g, or greater than 64 g, or greater than 68 g, or in the range from 56 g to 72 g, or in the range from 60 g to 68 g. The puncture load of secondary coatings formed as cured products of the curable secondary coating compositions disclosed herein at a cross-sectional area of 20000 $\mu m^2$ is greater than 68 g, or greater than 72 g, or greater than 76 g, or greater than 80 g, or in the range from 68 g to 92 g, or in the range from 72 g to 88 g. Embodiments include secondary coatings having any combination of the foregoing puncture loads.

As used herein, normalized puncture load refers to the ratio of puncture load to cross-sectional area. The puncture load of secondary coatings formed as cured products of the curable secondary coating compositions disclosed herein have a normalized puncture load greater than $3.2 \times 10^4$ g/$\mu m^2$, or greater than $3.6 \times 10^4$ g/$\mu m^2$, or greater than $4.0 \times 10^4$ g/$\mu m^2$, or greater than $4.4 \times 10^4$ g/$\mu m^2$, or greater than $4.8 \times 10^4$ g/$\mu m^2$, or in the range from $3.2 \times 10^4$ g/$\mu m^2$ to $5.6 \times 10^4$ g/$\mu m^2$, or in the range from $3.6 \times 10^4$ g/$\mu m^2$ to $5.2 \times 10^4$ g/$\mu m^2$, or in the range from $4.0 \times 10^4$ g/$\mu m^2$ to $4.8 \times 10^{-4}$ g/$\mu m^2$.

*Secondary Coatings - Properties - Static Mechanical Damage Resistance (D50).* The static mechanical damage resistance (D50) was measured for two fiber samples using the technique described above. The each fiber sample included a glass fiber having a diameter of 125 μm, a primary coating with thickness 32.5 μm surrounding and in direct contact with the glass fiber, and a secondary coating with thickness 26 μm surrounding and in direct contact with the glass fiber. Each fiber sample included the reference primary coating described above. The secondary coating of one fiber sample was the cured product of comparative curable secondary coating composition A and the static mechanical damage resistance (D50) for this fiber sample was measured to be 675 g. The secondary coating of the other fiber sample was the cured product of curable secondary composition SD and the static mechanical damage resistance (D50) for this fiber sample was measured to be about 1040 g. A significant improvement in static mechanical damage resistance (D50) was observed for the secondary coatings described herein.

The static mechanical damage resistance (D50) of secondary coatings obtained from the curable secondary coating compositions disclosed herein is greater than 850 g, or greater than 900 g, or greater than 950 g, or greater than 1000 g, or in the range from 850 g to 1100 g, or in the range from 900 g to 1050 g.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that any particular order be inferred.

It will be apparent to those skilled in the art that various modifications and variations can be made without departing from the spirit or scope of the invention. Since modifications combinations, sub-combinations and variations of the disclosed embodiments incorporating the spirit and substance of the invention may occur to persons skilled in the art, the invention should be construed to include everything within the scope of the appended claims and their equivalents.

## Claims

**1.** A curable coating composition comprising:

an alkoxylated bisphenol-A diacrylate monomer in an amount greater than 55 wt%, the alkoxylated bisphenol-A diacrylate monomer having a degree of alkoxylation in the range from 2 to 16; and
a triacrylate monomer in an amount in the range from 2.0 wt% to 25 wt%, the triacrylate monomer comprising an alkoxylated trimethylolpropane triacrylate monomer having a degree of alkoxylation in the range from 2 to 16 or a tris[(acryloyloxy)alkyl] isocyanurate monomer.

**2.** The curable coating composition of claim 1, wherein the alkoxylated bisphenol-A diacrylate monomer is present in an amount in the range from 60 wt% to 75 wt%.

**3.** The curable coating composition of claim 1 or 2, wherein the alkoxylated bisphenol-A diacrylate monomer has a degree of alkoxylation in the range from 2 to 8.

**4.** The curable coating composition of any one of the preceding claims, wherein the triacrylate monomer is a tris[(acryloyloxy)alkyl] isocyanurate monomer.

**5.** The curable coating composition of any one of the preceding claims, with one or more of the following:

• wherein the triacrylate monomer is present in an amount in the range from 8.0 wt% to 15 wt%;
• wherein the alkoxylated trimethylolpropane triacrylate monomer has a degree of alkoxylation in the range from 2 to 8;
• wherein the alkoxylated trimethylolpropane triacrylate monomer is an ethoxylated trimethylolpropane triacrylate monomer;
• wherein the alkoxylated bisphenol-A diacrylate monomer is an ethoxylated bisphenol-A diacrylate monomer.

**6.** The curable coating composition of any one of the preceding claims, wherein the tris[(acryloyloxy)alkyl] isocyanurate monomer is a tris(2-hydroxyethyl) isocyanurate triacrylate monomer.

**7.** The curable coating composition of any one of the preceding claims, further comprising a bisphenol-A epoxy diacrylate monomer in an amount in the range from 5.0 wt% to 20 wt%.

**8.** The curable coating composition of any one of the preceding claims, with one or more of the following:

• wherein the curable coating composition lacks an alkoxylated bisphenol-A diacrylate having a degree of alkoxylation greater than 25;
• wherein the curable coating composition lacks an alkoxylated bisphenol-A diacrylate having a degree of alkoxylation greater than 15.

**9.** A cured product of the curable coating composition of any of the preceding claims.

**10.** The cured product of claim 9, with one or more of the following:

- wherein the cured product has a Young's modulus greater than 2400 MPa, preferably greater than 2700 MPa;
- wherein the cured product has a yield strength greater than 55 MPa, preferably greater than 70 MPa;
- wherein the cured product has a fracture toughness $K_c$ greater than 0.87 MPa-$m^{0.5}$, preferably greater than greater than 0.93 MPa-$m^{0.5}$;
- wherein the cured product has an *in situ* glass transition temperature $T_g$ greater than 80 °C, greater than 100 °C.

**11.** The cured product of any one of the claims 9 or 10, wherein the cured product has a normalized puncture load greater than 3.6 x $10^4$ g/$\mu m^2$, preferably greater than 4.0 x $10^4$ g/$\mu m^2$, more preferably greater than 4.4 x $10^4$ g/$\mu m^2$, most preferably greater than 4.8 x $10^4$ g/$\mu m^2$.

**12.** The cured product of any one of the claims 9-11, wherein the cured product has a static mechanical damage resistance D50 greater than 900 g.

**13.** An optical fiber comprising a cured product of any one of the claims 9-12.

**14.** A method of forming an optical fiber comprising:

- applying the coating composition of any one of the claims 1 - 8 to a glass fiber; and
- curing the coating composition to form a coating on the glass fiber.

**15.** The method of claim 14, wherein the curing comprises exposing the coating composition to UV light, preferably wherein the UV light is supplied by a light emitting diode.

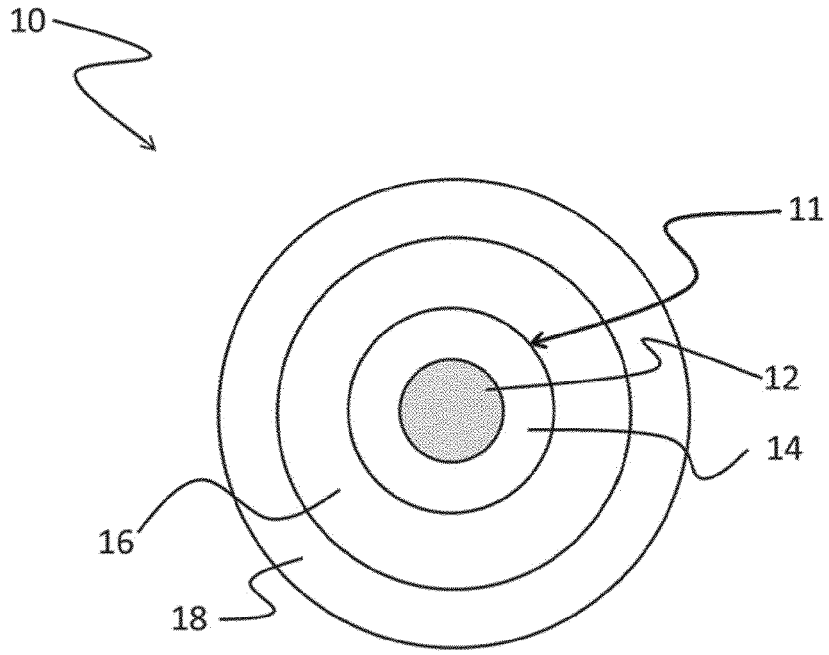


FIG. 1

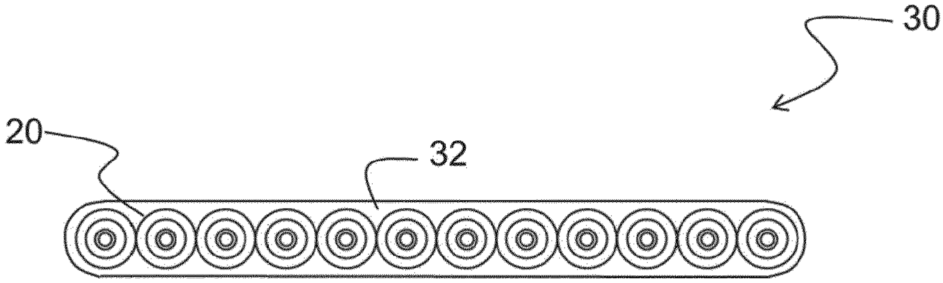


FIG. 2

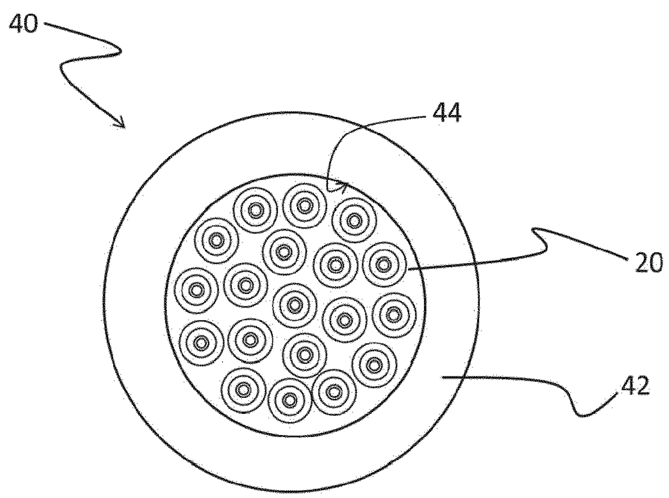


FIG. 3

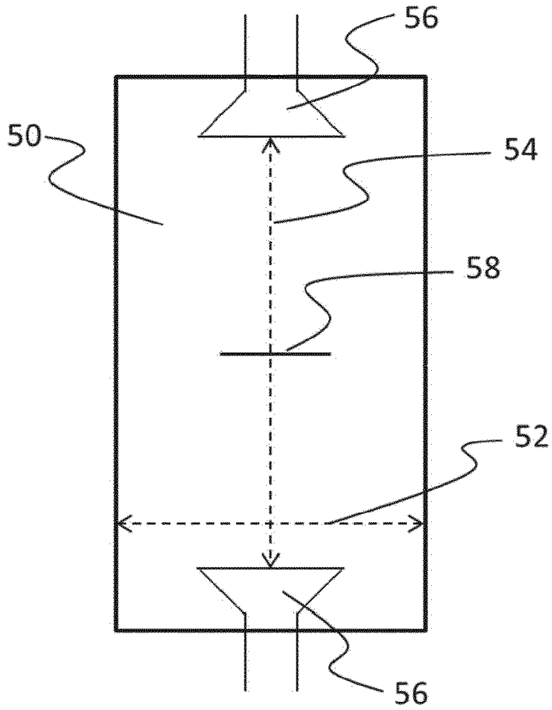


FIG. 4

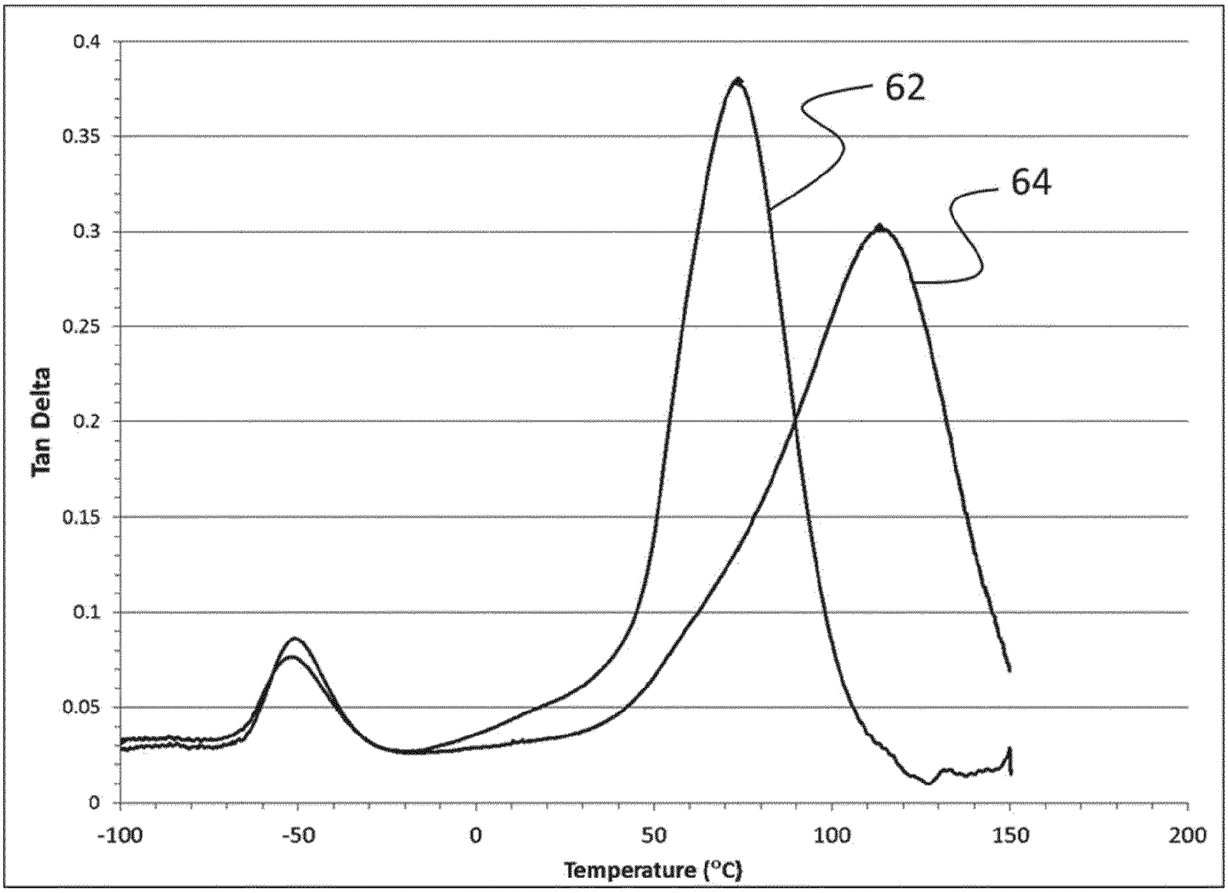
0.4
0.35
0.3
0.25
0.2
0.15
0.1
0.05
0
Tan Delta
-100
-50
0
50
100
150
200
Temperature (°C)
62
64

FIG. 5

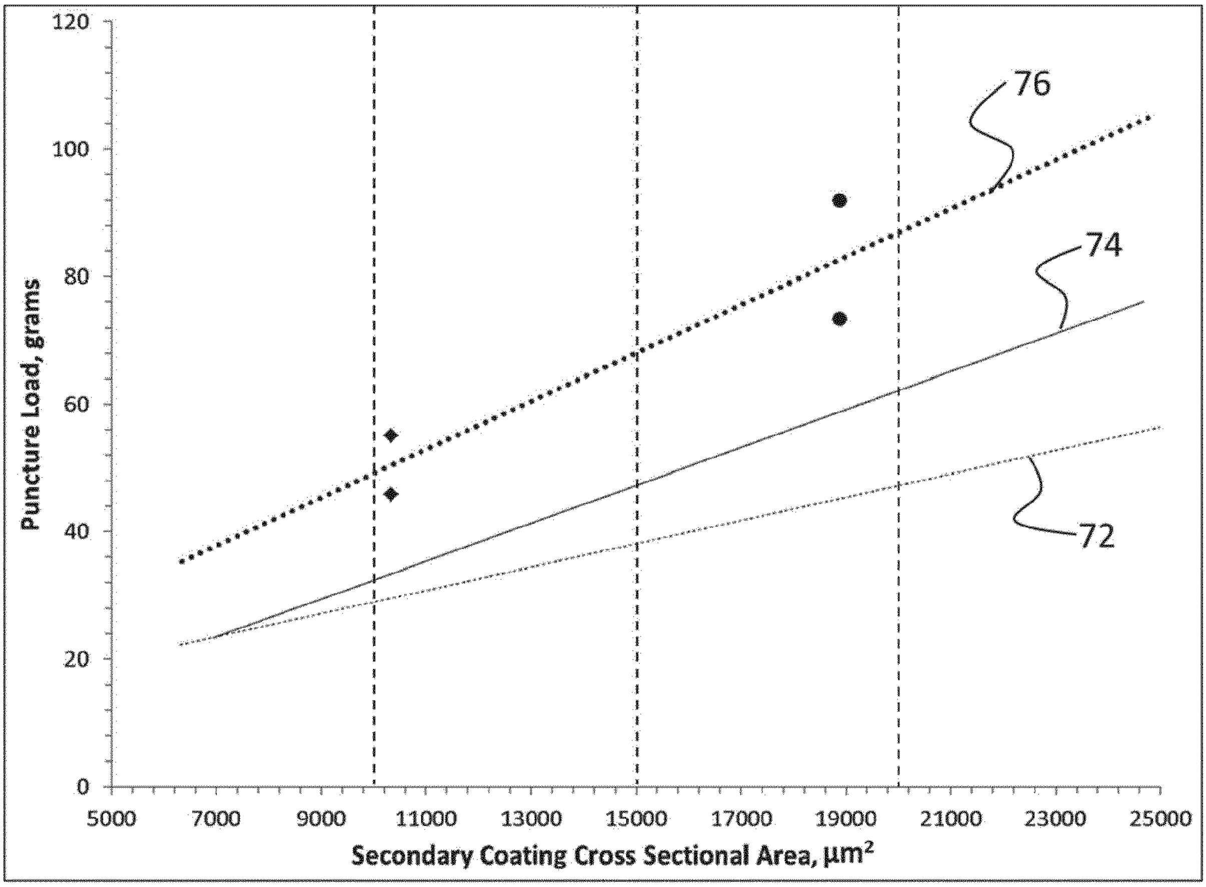
120
100
80
60
40
20
0
Puncture Load, grams
5000
7000
9000
11000
13000
15000
17000
19000
21000
23000
25000
Secondary Coating Cross Sectional Area, µm²
76
74
72

FIG. 6

Europäisches Patentamt
European Patent Office
Office européen des brevets

# EUROPEAN SEARCH REPORT

Application Number
EP 20 15 2006

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 6 775 451 B1 (BOTELHO JOHN W [US] ET AL) 10 August 2004 (2004-08-10)<br>* column 18, line 62 - column 19, line 8; example o; table i *<br>----- | 1-3,7<br>4,5, 13-15 | INV.<br>C03C17/32<br>C09D4/00 |
| Y | US 2018/215661 A1 (KOUZMINA INNA IGOREVNA [US] ET AL) 2 August 2018 (2018-08-02)<br>* paragraph [0100] *<br>----- | 4,5, 13-15 | |

| TECHNICAL FIELDS SEARCHED (IPC) |
|---|
| C03C<br>C09D<br>C08F<br>C09J |

The present search report has been drawn up for all claims

| Place of search | Date of completion of the search | Examiner |
|---|---|---|
| Munich | 30 May 2020 | Friederich, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

1

# ANNEX TO THE EUROPEAN SEARCH REPORT ON EUROPEAN PATENT APPLICATION NO. EP 20 15 2006

This annex lists the patent family members relating to the patent documents cited in the above-mentioned European search report. The members are as contained in the European Patent Office EDP file on
The European Patent Office is in no way liable for these particulars which are merely given for the purpose of information.

30-05-2020

| Patent document cited in search report | | Publication date | Patent family member(s) | | | Publication date |
|---|---|---|---|---|---|---|
| US 6775451 | B1 | 10-08-2004 | NONE | | | |
| US 2018215661 | A1 | 02-08-2018 | CN | 110312689 | A | 08-10-2019 |
| | | | EP | 3573937 | A1 | 04-12-2019 |
| | | | JP | 2020507540 | A | 12-03-2020 |
| | | | US | 2018215661 | A1 | 02-08-2018 |
| | | | WO | 2018140575 | A1 | 02-08-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5908484 A
- US 6243523 B
- US 6289158 B


### Non-patent literature cited in the description


- **G. SCOTT GLAESEMANN ; DONALD A. CLARK.** Quantifying the Puncture Resistance of Optical Fiber Coatings. *the Proceedings of the 52nd International Wire & Cable Symposium,* 2003, 237-245
- **TABADDOR et al.** *Proc. 47th IWCS,* 1998, 725